# EUROPÄISCHE PATENTSCHRIFT

(11) **EP 3 728 468 B1**
(45) Veröffentlichungstag und Bekanntmachung des Hinweises auf die Patenterteilung: **01.09.2021**
(21) Anmeldenummer: 18814943.9
(22) Anmeldetag: 13.12.2018
(51) Int. Cl.: C08L 69/00

(54) **POLYCARBONAT-ZUSAMMENSETZUNG MIT GUTER FLAMMWIDRIGKEIT**
POLYCARBONATE COMPOSITION WITH GOOD FLAMMABILITY CHARACTERISTICS
COMPOSITION DE POLYCARBONATE PRÉSENTANT UNE BONNE PROPRIÉTÉ IGNIFUGE

(30) Priorität: 20.12.2017 EP 17208734
(43) Veröffentlichungstag der Anmeldung: 28.10.2020
(73) Patentinhaber: Covestro Deutschland AG, 51373 Leverkusen (DE)
(72) Erfinder: TASCHNER, Vera, 40764 Langenfeld (DE); KURZIDIM, Dirk, 50259 Pulheim (DE); HÖHNK, Thomas, 41515 Grevenbroich (DE); KRANER, Klaus, 42651 Solingen (DE); SÄMISCH, Birte, 50733 Köln (DE); ECKEL, Thomas, 41540 Dormagen (DE); WENZ, Eckhard, 50937 Köln (DE); RUDOLF, Reiner, 40764 Langenfeld (DE); HOBEIKA, Sven, 42699 Solingen (DE); KROH, Matthias, 72348 Rosenfeld (DE)
(74) Vertreter: Levpat
(86) Internationale Anmeldenummer: PCT/EP2018/084655
(87) Internationale Veröffentlichungsnummer: WO 2019/121272

(56) Entgegenhaltungen:
- EP-A1- 1 998 951
- EP-A1- 2 492 303
- US-A1- 2014 356 551

## Beschreibung

Die Erfindung betrifft eine Polycarbonat-Zusammensetzung zur Herstellung einer thermoplastischen Formmasse, ein Verfahren zur Herstellung der thermoplastischen Formmasse, die Formmasse selbst, die Verwendung der Formmasse zur Herstellung von Formkörpern und die Formkörper selbst.

Polycarbonat-Zusammensetzungen sind seit langem bekannt. In zahlreichen Patentanmeldungen wird zudem beschrieben, dass sie sich durch den Einsatz von kautschukmodifizierten Pfropfpolymerisaten hinsichtlich ihrer Zähigkeitseigenschaften verbessern lassen. Weiterhin ist bekannt, dass durch den Einsatz von phosphorhaltigen Flammschutzmitteln eine sehr gute Flammwidrigkeit erreicht werden kann.

Durch die Variation der Bestandteile und deren Anteile in den Zusammensetzungen lassen sich die thermischen, rheologischen und mechanischen Eigenschaften der Formmassen in weiten Bereichen an die jeweiligen Bedürfnisse anpassen.

WO 2007/107252 A1 offenbart schlagzähmodifizierte Polycarbonat-Zusammensetzungen enthaltend verzweigtes aromatisches Polycarbonat und/oder verzweigtes aromatisches Polyestercarbonat, Pfropfpolymerisat enthaltend eine oder mehrere Pfropfgrundlagen ausgewählt aus der Gruppe der Silikonkautschuke und Silikonacrylatkautschuke, Talk, phosphorhaltiges Flammschutzmittel, eine oder mehrerer anorganische Borverbindungen und Antitropfmittel, die erhöhte brandschutztechnische Anforderungen erfüllen.

WO 99/57198 beschreibt PC/ABS-Formmassen, die mit einem Oligophosphat flammwidrig ausgerüstet sind und in denen lineare und verzweigte Polycarbonate mit hohem Molekulargewicht zum Einsatz kommen. Die rheologischen Eigenschaften der beschriebenen Formmassen lassen eine Verarbeitung im Extrusionsverfahren zu.

EP 2492303 A1 offenbart Polymerzusammensetzungen enthaltend einen Thermoplasten wie Polycarbonat oder Polycarbonat/ABS und hexagonales Bornitrid. Die Zusammensetzungen können mit Flammschutzmitteln ausgerüstet sein und zeichnen sich durch eine geringe Wärmelängenausdehnung und eine hohe Formstabilität aus.

US 2014/0356551 A1 offenbart thermoplastische Zusammensetzungen enthaltend Polycarbonat und einen anorganischen Füllstoff sowie optional Pfropfpolymer, Vinylcopolymer sowie weitere Additive. Aus den Zusammensetzungen lassen sich Formteile mit hoher Oberflächenqualität, hoher Dimensionsstabilität und hoher Wärmeformbeständigkeit herstellen.

WO 01/81470 offenbart flammgeschützte Zusammensetzungen enthaltend Polyester, stickstoffhaltige Flammschutzmittel, phosphorhaltige Flammschutzmittel, Polytetrafluorethylen und eine Komponente enthaltend Zink und/oder Bor ausgewählt aus Zinksulfit, Zinkborat und Bornitrid. Durch diese Komponente wird das Verhalten im Glühdrahttest (GWT) verbessert.

Für den Einsatz in Schienenfahrzeugen werden von technischer und regulatorischer Seite besonders hohe Anforderungen an die Innenraummaterialien gestellt. So sollen die eingesetzten Formkörper eine hohe Steifigkeit und eine gute Beständigkeit gegenüber aggressiven Medien aufweisen und gleichzeitig spezielle Flammschutzprüfungen bestehen, wie sie z.B. in der EN45545 beschrieben sind.

Dieses Anforderungsprofil wird durch die aus dem Stand der Technik bekannten Formmassen nicht in ausreichendem Maße erfüllt.

Es war daher wünschenswert, Formmassen aus hochflammgeschützten und schlagzähmodifizierten PC-Blends mit einer optimalen Kombination aus hohem E-Modul und guter Chemikalienbeständigkeit, bei gleichzeitig niedriger Wärmefreisetzung nach ISO 5660-1 und geringer Rauchgasdichte nach ISO 5659-2 der aus den Formmassen , bereitzustellen.

Es wurde überraschend gefunden, dass eine Zusammensetzung zur Erzeugung einer thermoplastischen Formmasse, wobei die Zusammensetzung folgende Bestandteile enthält oder aus diesen besteht,
A) 50-90 Gew.-%, bevorzugt 55-80 Gew.-%, weiter bevorzugt 60-75 Gew.-% aromatisches Polycarbonat oder Polyestercarbonat mit einer relativen Lösungsviskosität von mindestens 1,285 gemessen in CH₂Cl₂ als Lösungsmittel bei 25°C und einer Konzentration von 0,5 g/100 ml,
B) 1-10 Gew.-%, bevorzugt 1-8 Gew.-%, weiter bevorzugt 1-6 Gew.-% kautschukmodifiziertes Pfropfpolymerisat,
C) 2,5-10 Gew.-%, bevorzugt 2,5-8 Gew.-%, weiter bevorzugt 3-6 Gew.-% Bornitrid,
D) 4-20 Gew.-%, bevorzugt 5-15 Gew.-%, weiter bevorzugt 6-13 Gew.-% Talk,
E) 2-20 Gew.-%, bevorzugt 3-15 Gew.-%, weiter bevorzugt 5-13 Gew.-% phosphorhaltiges Flammschutzmittel,
F) 0-20 Gew.-%, bevorzugt 0,1- 10 Gew.-%, weiter bevorzugt 0,3-6 Gew.-% weitere Additive,
das gewünschte Eigenschaftsprofil aufweist.

In einer bevorzugten Ausführungsform besteht die Zusammensetzung zu mindestens 90 Gew.-%, weiter bevorzugt zu mindestens 95 Gew.-% aus den Komponenten A-F. Am meisten bevorzugt besteht die Zusammensetzung nur aus den Komponenten A-F.

Bevorzugt sollte ein Zug-E-Modul nach ISO 527 von mindestens 4000 MPa erreicht werden. Ebenso bevorzugt sollte als Maß für die Chemikalienbeständigkeit die Zeit bis zum Bruch im ESC Test (Environmental Stress Cracking) mit Rapsöl als Testmedium bei 2,4 % Randfaserdehnung die Zeit bis zum Bruch mindestens zwei Stunden betragen. Bevorzugt sollte bei der Prüfung der Wärmefreisetzung ein MARHE-Wert (Maximum Average Rate of Heat Emission) von 90 kW/m² nicht überschritten werden.
Bevorzugt sollte bei der Prüfung der Rauchgasentwicklung ein Ds(4)-Wert von 300 und ein VOF 4 - Wert von 600 min nicht überschritten werden.

### Komponente A

Polycarbonate im Sinne der vorliegenden Erfindung sind sowohl Homopolycarbonate als auch Copolycarbonate und/oder Polyestercarbonate; die Polycarbonate können in bekannter Weise linear oder verzweigt sein. Erfindungsgemäß können auch Mischungen von Polycarbonaten verwendet werden.

Die thermoplastischen Polycarbonate einschließlich der thermoplastischen, aromatischen Polyestercarbonate weisen eine relative Lösungsviskosität bei 25°C in CH₂Cl₂ und einer Konzentration von 0,5 g pro 100 ml CH₂Cl₂ von 1,285 bis 1,40, bevorzugt 1,29 bis 1,36 auf.

Ein Teil, bis zu 80 Mol-%, vorzugsweise von 20 Mol-% bis zu 50 Mol-%, der Carbonat-Gruppen in den erfindungsgemäß eingesetzten Polycarbonaten können durch aromatische DicarbonsäureesterGruppen ersetzt sein. Derartige Polycarbonate, die sowohl Säurereste der Kohlensäure als auch Säurereste von aromatischen Dicarbonsäuren in die Molekülkette eingebaut enthalten, werden als aromatische Polyestercarbonate bezeichnet. Sie werden im Rahmen der vorliegenden Erfindung unter dem Oberbegriff der thermoplastischen, aromatischen Polycarbonate subsumiert.

Die Herstellung der Polycarbonate erfolgt in bekannter Weise aus Diphenolen, Kohlensäurederivaten, gegebenenfalls Kettenabbrechern und gegebenenfalls Verzweigern, wobei zur Herstellung der Polyestercarbonate ein Teil der Kohlensäurederivate durch aromatische Dicarbonsäuren oder Derivate der Dicarbonsäuren ersetzt wird, und zwar je nach Maßgabe der in den aromatischen Polycarbonaten zu ersetzenden Carbonatstruktureinheiten durch aromatische Dicarbonsäureesterstruktureinheiten.

Für die Herstellung von Polycarbonaten geeignete Dihydroxyarylverbindungen sind solche der Formel (1)

HO-Z-OH (1),

in welcher
- Z: ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.

Bevorzugt steht Z in Formel (1) für einen Rest der Formel (2) 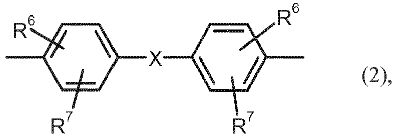 in der
- R⁶ und R⁷: unabhängig voneinander für H, C₁- bis C₁₈-Alkyl-, C₁- bis C₁₈-Alkoxy, Halogen wie Cl oder Br oder für jeweils gegebenenfalls substituiertes Aryl- oder Aralkyl, bevorzugt für H oder C₁- bis C₁₂-Alkyl, besonders bevorzugt für H oder C₁- bis C₈-Alkyl und ganz besonders bevorzugt für H oder Methyl stehen, und
- X: für eine Einfachbindung, -SO₂-, -CO-, -O-, -S-, C₁- bis C₆-Alkylen, C₂- bis Cs-Alkyliden oder C₅- bis C₆-Cycloalkyliden, welches mit C₁- bis C₆-Alkyl, vorzugsweise Methyl oder Ethyl, substituiert sein kann, ferner für C₆- bis C₁₂-Arylen, welches gegebenenfalls mit weiteren Heteroatome enthaltenden aromatischen Ringen kondensiert sein kann, steht.

Bevorzugt steht X für eine Einfachbindung, C₁- bis C₅-Alkylen, C₂- bis C₅-Alkyliden, C₅- bis C₆-Cycloalkyliden, -O-, -SO-, -CO-, -S-, -SO₂-
oder für einen Rest der Formel (2a)

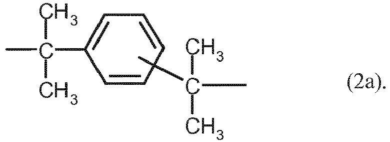

Beispiele für Dihydroxyarylverbindungen (Diphenole) sind: Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ether, Bis-(hydroxyphenyl)-ketone, Bis-(hydroxyphenyl)-sulfide, Bis-(hydroxyphenyl)-sulfone, Bis-(hydroxyphenyl)-sulfoxide, 1,1'-Bis-(hydroxyphenyl)-diisopropylbenzole sowie deren kernalkylierte und kernhalogenierte Verbindungen.

Für die Herstellung der erfindungsgemäß zu verwendenden Polycarbonate geeignete Diphenole sind beispielsweise Hydrochinon, Resorcin, Dihydroxydiphenyl, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole sowie deren alkylierte, kernalkylierte und kernhalogenierte Verbindungen.

Bevorzugte Diphenole sind 4,4'-Dihydroxydiphenyl, 2,2-Bis-(4-hydroxyphenyl)-1-phenylpropan, 1,1-Bis-(4-hydroxyphenyl)-phenylethan, 2,2-Bis-(4-hydroxyphenyl)propan, 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol und 1,1-Bis-(4-hydroxyphenyl)-3,3,5-trimethylcyclohexan (Bisphenol TMC).

Besonders bevorzugte Diphenole sind 4,4'-Dihydroxydiphenyl, 1,1-Bis-(4-hydroxyphenyl)-phenyl-ethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC).

Diese und weitere geeignete Diphenole sind z.B. in US 2 999 835 A, 3 148 172 A, 2 991 273 A, 3 271 367 A, 4 982 014 A und 2 999 846 A, in den deutschen Offenlegungsschriften 1 570 703 A, 2 063 050 A, 2 036 052 A, 2 211 956 A und 3 832 396 A, der französischen Patentschrift 1 561 518 A1, in der Monographie "H. Schnell, Chemistry and Physics of Polycarbonates, Interscience Publishers, New York 1964, S. 28 ff.; S.102 ff.", und in "D.G. Legrand, J.T. Bendler, Handbook of Polycarbonate Science and Technology, Marcel Dekker New York 2000, S. 72ff." beschrieben.

Im Falle der Homopolycarbonate wird nur ein Diphenol eingesetzt, im Falle von Copolycarbonaten werden zwei oder mehr Diphenole eingesetzt. Die verwendeten Diphenole, wie auch alle anderen der Synthese zugesetzten Chemikalien und Hilfsstoffe, können mit den aus ihrer eigenen Synthese, Handhabung und Lagerung stammenden Verunreinigungen kontaminiert sein. Es ist jedoch wünschenswert, mit möglichst reinen Rohstoffen zu arbeiten.

Die zur Regelung des Molekulargewichtes benötigten monofunktionellen Kettenabbrecher, wie Phenole oder Alkylphenole, insbesondere Phenol, p-tert. Butylphenol, iso-Octylphenol, Cumylphenol, deren Chlorkohlensäureester oder Säurechloride von Monocarbonsäuren bzw. Gemische aus diesen Kettenabbrechern, werden entweder mit dem Bisphenolat bzw. den Bisphenolaten der Reaktion zugeführt oder aber zu jedem beliebigen Zeitpunkt der Synthese zugesetzt, solange im Reaktionsgemisch noch Phosgen oder Chlorkohlensäureendgruppen vorhanden sind, bzw. im Falle der Säurechloride und Chlorkohlensäureester als Kettenabbrecher, solange genügend phenolische Endgruppen des sich bildenden Polymers zur Verfügung stehen. Vorzugsweise werden der oder die Kettenabbrecher jedoch nach der Phosgenierung an einem Ort oder zu einem Zeitpunkt zugegeben, wenn kein Phosgen mehr vorliegt, aber der Katalysator noch nicht dosiert wurde, bzw. sie werden vor dem Katalysator, mit dem Katalysator zusammen oder parallel zudosiert.

In der gleichen Weise werden eventuell zu verwendende Verzweiger oder Verzweigermischungen der Synthese zugesetzt, üblicherweise jedoch vor den Kettenabbrechern. Üblicherweise werden Trisphenole, Quarterphenole oder Säurechloride von Tri- oder Tetracarbonsäuren verwendet oder auch Gemische der Polyphenole oder der Säurechloride.

Einige der als Verzweiger verwendbaren Verbindungen mit drei oder mehr als drei phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tris-(4-hydroxyphenyl)-benzol, 1,1,1-Tri-(4-hydroxyphenyl)-ethan, Tris-(4-hydroxyphenyl)-phenylmethan, 2,2-Bis-[4,4-bis-(4-hydroxyphenyl)-cyclohexyl] -propan, 2,4-Bis-(4-hydroxyphenyl-isopropyl)-phenol, Tetra-(4-hydroxyphenyl)-methan.

Einige der sonstigen trifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Die Menge der gegebenenfalls einzusetzenden Verzweiger beträgt 0,05 Mol-% bis 2 Mol-%, bezogen wiederum auf Mole an jeweils eingesetzten Diphenolen.

Die Verzweiger können entweder mit den Diphenolen und den Kettenabbrechern in der wässrigen alkalischen Phase vorgelegt werden oder in einem organischen Lösungsmittel gelöst vor der Phosgenierung zugegeben werden.

Alle diese Maßnahmen zur Herstellung der Polycarbonate sind dem Fachmann geläufig.

Für die Herstellung der Polyestercarbonate geeignete aromatische Dicarbonsäuren sind beispielsweise Orthophthalsäure, Terephthalsäure, Isophthalsäure, tert-Butylisophthalsäure, 3,3'-Diphenyldicarbonsäure, 4,4'-Diphenyldicarbonsäure, 4,4-Benzophenondicarbonsäure, 3,4'-Benzophenondicarbonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4,5'-dicarbonsäure.

Von den aromatischen Dicarbonsäuren werden besonders bevorzugt die Terephthalsäure und/oder Isophthalsäure eingesetzt.

Derivate der Dicarbonsäuren sind die Dicarbonsäuredihalogenide und die Dicarbonsäuredialkylester, insbesondere die Dicarbonsäuredichloride und die Dicarbonsäuredimethylester.

Der Ersatz der Carbonatgruppen durch die aromatischen Dicarbonsäureestergruppen erfolgt im Wesentlichen stöchiometrisch und auch quantitativ, so dass das molare Verhältnis der Reaktionspartner sich auch im fertigen Polyestercarbonat wiederfindet. Der Einbau der aromatischen Dicarbonsäureestergruppen kann sowohl statistisch als auch blockweise erfolgen.

Bevorzugte Herstellungsweisen der erfindungsgemäß zu verwendenden Polycarbonate, einschließlich der Polyestercarbonate, sind das bekannte Grenzflächenverfahren und das bekannte Schmelzeumesterungsverfahren (vgl. z. B. WO 2004/063249 A1, WO 2001/05866 A1, WO 2000/105867, US 5,340,905 A, US 5,097,002 A, US-A 5,717,057 A).

Im ersten Fall dienen als Säurederivate vorzugsweise Phosgen und gegebenenfalls Dicarbonsäuredichloride, im letzteren Fall vorzugsweise Diphenylcarbonat und gegebenenfalls Dicarbonsäurediester. Katalysatoren, Lösungsmittel, Aufarbeitung, Reaktionsbedingungen etc. für die Polycarbonatherstellung bzw. Polyestercarbonatherstellung sind in beiden Fällen hinreichend beschrieben und bekannt.

### Komponente B

Bei der Komponente B handelt es sich um kautschukmodifizierte Pfropfpolymerisate
Als Komponente B zum Einsatz kommende kautschukmodifizierte Pfropfpolymerisate umfassen
B.1 5 bis 95, vorzugsweise 8 bis 92, insbesondere 10 bis 60 Gew.-%, bezogen auf Komponente B, wenigstens eines Vinylmonomeren auf
B.2 95 bis 5, vorzugsweise 92 bis 8, insbesondere 90 bis 40 Gew.-%, bezogen auf Komponente B, einer oder mehrerer kautschukartiger Pfropfgrundlagen, vorzugsweise mit Glasübergangstemperaturen < 10°C, weiter bevorzugt < 0°C, besonders bevorzugt < -20°C.

Die Glasübergangstemperatur wird mittels dynamischer Differenzkalorimetrie (DSC) gemäß der Norm DIN EN 61006 bei einer Heizrate von 10 K/min mit Definition der T_{g} als Mittelpunkttemperatur (Tangentenmethode) bestimmt.

Die Pfropfgrundlage B.2 hat im allgemeinen eine mittlere Teilchengröße (dso-Wert) von 0,05 bis 10 µm, vorzugsweise 0,1 bis 5 µm, besonders bevorzugt 0,2 bis 1 µm.

Die mittlere Teilchengröße dso ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

Monomere B.1 sind vorzugsweise Gemische aus
B.1.1 50 bis 99, bevorzugt 60 bis 80, insbesondere 70 bis 80 Gew.-Teile, bezogen auf B.1, Vinylaromaten und/oder kernsubstituierten Vinylaromaten (wie Styrol, α-Methylstyrol, p-Methylstyrol, p-Chlorstyrol) und/oder Methacrylsäure-(C₁-C₈)-Alkylester, wie Methylmethacrylat, Ethylmethacrylat), und
B.1.2 1 bis 50, bevorzugt 20 bis 40, insbesondere 20 bis 30 Gew.-Teilen, bezogen auf B.1, Vinylcyanide (ungesättigte Nitrile wie Acrylnitril und Methacrylnitril) und/oder (Meth)Acrylsäure-(C₁-C₈)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid und N-Phenyl-Maleinimid.

Bevorzugte Monomere B.1.1 sind ausgewählt aus mindestens einem der Monomere Styrol, α-Methylstyrol und Methylmethacrylat, bevorzugte Monomere B.1.2 sind ausgewählt aus mindestens einem der Monomere Acrylnitril, Maleinsäureanhydrid und Methylmethacrylat. Besonders bevorzugte Monomere sind B.1.1 Styrol und B1.2 Acrylnitril oder B.1.1 = B.1.2 Methylmethacrylat.

Für die Pfropfpolymerisate B geeignete Pfropfgrundlagen B.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren- und Ethylen/Vinylacetat-Kautschuke sowie Silikon-Acrylat-Kompositkautschuke.

Bevorzugte Pfropfgrundlagen B.2 sind Dienkautschuke, beispielsweise auf Basis Butadien und Isopren, oder Gemische von Dienkautschuken oder Copolymerisate von Dienkautschuken oder deren Gemischen mit weiteren copolymerisierbaren Monomeren (z.B. gemäß B.1.1 und B.1.2) sowie Acrylatkautschuke und Silikon-Acrylat-Kompositkautschuke.

Bevorzugt Polymerisate B sind beispielsweise ABS- oder MBS-Polymerisate, wie sie z.B. in der DE-OS 2 035 390 (=US-PS 3 644 574) oder in der DE-OS 2 248 242 (=GB-PS 1 409 275) bzw. in Ullmanns, Enzyklopädie der Technischen Chemie, Bd. 19 (1980), S. 280 ff. beschrieben sind.

Die Pfropfcopolymerisate B werden durch radikalische Polymerisation, z.B. durch Emulsions-, Suspensions-, Lösungs- oder Massepolymerisation, vorzugsweise durch Emulsions- oder Massepolymerisation, insbesondere durch Emulsionspolymerisation hergestellt.

Der Gelanteil der Pfropfgrundlage B.2 beträgt mindestens 30 Gew.-%, vorzugsweise mindestens 40 Gew.-%, insbesondere mindestens 60 Gew.-%, jeweils bezogen auf B.2 und gemessen als unlöslicher Anteil in Toluol.

Der Gelgehalt der Pfropfgrundlage B.2 wird bei 25°C in einem geeigneten Lösungsmittel als in diesen Lösungsmitteln unlöslicher Anteil bestimmt (M. Hoffmann, H. Krömer, R. Kuhn, Polymeranalytik I und II, Georg Thieme-Verlag, Stuttgart 1977).

Besonders geeignete Pfropfkautschuke sind auch ABS-Polymerisate, die durch Redox-Initiierung mit einem Initiatorsystem aus organischem Hydroperoxid und Ascorbinsäure gemäß US-P 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B auch solche Produkte verstanden, die durch (Co)Polymerisation der Pfropfmonomere in Gegenwart der Pfropfgrundlage gewonnen werden und bei der Aufarbeitung mit anfallen. Diese Produkte können demnach auch freies, d.h. nicht chemisch an den Kautschuk gebundenes (Co)Polymerisat der Pfropfmonomere enthalten.

Geeignete Acrylatkautschuke gemäß B.2 sind vorzugsweise Polymerisate aus Acrylsäurealkylestern, gegebenenfalls mit bis zu 40 Gew.-%, bezogen auf B.2 anderen polymerisierbaren, ethylenisch ungesättigten Monomeren. Zu den bevorzugten polymerisierbaren Acrylsäureestern gehören C₁ bis C₈-Alkylester, beispielsweise Methyl-, Ethyl-, Butyl-, n-Octyl- und 2-Ethylhexylester; Halogenalkylester, vorzugsweise Halogen-C₁-C₈-alkylester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Allylmethacrylat; mehrfach ungesättigte heterocyclische Verbindungen, wie Trivinyl- und Triallylcyanurat; polyfunktionelle Vinylverbindungen, wie Di- und Trivinylbenzole; aber auch Triallylphosphat und Diallylphthalat. Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen. Besonders bevorzugte vernetzende Monomere sind die cyclischen Monomere Triallylcyanurat, Triallylisocyanurat, Triacryloylhexahydros-triazin, Triallylbenzole. Die Menge der vernetzten Monomere beträgt vorzugsweise 0,02 bis 5, insbesondere 0,05 bis 2 Gew.-%, bezogen auf die Pfropfgrundlage B.2. Bei cyclischen vernetzenden Monomeren mit mindestens drei ethylenisch ungesättigten Gruppen ist es vorteilhaft, die Menge auf unter 1 Gew.-% der Pfropfgrundlage B.2 zu beschränken.

Bevorzugte "andere" polymerisierbare, ethylenisch ungesättigte Monomere, die neben den Acrylsäureestern gegebenenfalls zur Herstellung der Pfropfgrundlage B.2 dienen können, sind z.B. Acrylnitril, Styrol, α -Methylstyrol, Acrylamide, Vinyl-C₁-C₆-alkylether, Methylmethacrylat, Butadien. Bevorzugte Acrylatkautschuke als Pfropfgrundlage B.2 sind Emulsionspolymerisate, die einen Gelgehalt von mindestens 60 Gew.-% aufweisen.

Weitere geeignete Pfropfgrundlagen gemäß B.2 sind Silikonkautschuke mit pfropfaktiven Stellen, wie sie in den DE-OS 3 704 657, DE-OS 3 704 655, DE-OS 3 631 540 und DE-OS 3 631 539 beschrieben werden.

Als Pfropfgrundlage B.2 kann bevorzugt auch Silikon-Acrylat-Kompositkautschuk eingesetzt werden. Diese Silikon-Acrylat-Kompositkautschuke sind vorzugsweise Komposit-Kautschuke mit pfropfaktiven Stellen enthaltend 10 - 95 Gew.-%, bevorzugt 50-95 Gew.-% Silikonkautschuk-Anteil B.2.1 und 90 bis 5 Gew.-%, bevorzugt 50 bis 5 Gew.-% Polyalkyl(meth)acrylatkautschuk-Anteil B.2.2, wobei sich die beiden genannten Kautschuk-Komponenten im Komposit-Kautschuk gegenseitig durchdringen, so dass sie sich nicht wesentlich voneinander trennen lassen.

Silikon-Acrylat-Komposit-Kautschuke sind bekannt und beispielsweise beschrieben in US 5,807,914, EP 430134 und US 4888388.

Geeignete Silikonkautschuk-Komponenten B.2.1 der Silikon-Acrylat-Kompositkautschuke gemäß B.2 sind Silikonkautschuke mit pfropfaktiven Stellen, deren Herstellungsmethode beispielsweise in US 2891920, US 3294725, DE-OS 3 631 540, EP 249964, EP 430134 und US 4888388 beschrieben wird.

Der Silikonkautschuk gemäß B.2.1 wird bevorzugt durch Emulsionspolymerisation hergestellt, bei der Siloxan-Monomerbausteine, Vernetzungs- oder Verzweigungsmittel (IV) und gegebenenfalls Pfropfmittel (V) eingesetzt werden.

Als Siloxan-Monomerbausteine werden beispielsweise und bevorzugt Dimethylsiloxan oder cyclische Organosiloxane mit wenigstens 3 Ringgliedern, vorzugsweise 3 bis 6 Ringgliedern, wie beispielsweise und bevorzugt Hexamethylcyclotrisiloxan, Octamethylcyclotetrasiloxan, Decamethylcyclopentasiloxan, Dodecamethylcyclohexasiloxan, Trimethyl-triphenyl-cyclotrisiloxane, Tetramethyltetraphenyl-cyclotetrasiloxane, Octaphenylcyclotetrasiloxan eingesetzt.

Die Organosiloxan-Monomere können allein oder in Form von Mischungen mit 2 oder mehr Monomeren eingesetzt werden.
Als Vernetzungs- oder Verzweigungsmittel (IV) werden vorzugsweise silanbasierende Vernetzungsmittel mit einer Funktionalität von 3 oder 4, besonders bevorzugt 4, verwendet. Beispielhaft und vorzugsweise seien genannt: Trimethoxymethylsilan, Triethoxyphenylsilan, Tetramethoxysilan, Tetraethoxysilan, Tetra-n-propoxysilan und Tetrabutoxysilan. Das Vernetzungsmittel kann allein oder in Mischung von zwei oder mehreren eingesetzt werden. Besonders bevorzugt ist Tetraethoxysilan.

Als Pfropfmittel (V) seien beispielhaft genannt: β-Methacryloyloxy-ethyldimethoxymethyl-silan, γ-Methacryloyloxy-propylmethoxydimethyl-silan, γ-Methacryloyloxy-propyldimethoxymethyl-silan, γ-Methacryloyloxy-propyltrimethoxy-silan, γ-Methacryloyloxy-propylethoxydiethyl-silan, γ-Methacryloyloxy-propyldiethoxymethyl-silan, δ-Methacryloyl-oxy-butyldiethoxymethyl-silane oder Mischungen hieraus.

Bevorzugt werden 0 bis 20 Gew.-% Pfropfmittel bezogen auf das Gesamtgewicht des Silikonkautschuks eingesetzt.

Der Silikonkautschuk kann durch Emulsionspolymerisation hergestellt werden, wie beispielsweise in US 2891920 und US 3294725 beschrieben.

Geeignete Polyalkyl(meth)acrylatkautschuk-Komponenten B.2.2 der Silikon-Acrylat-Kompositkautschuke können hergestellt werden aus Methacrylsäurealkylestern und/oder Acrylsäurealkylestern, einem Vernetzungsmittel (VI) und einem Pfropfmittel (VII). Hierbei sind beispielhafte und bevorzugte Methacrylsäurealkylester und/oder Acrylsäurealkylester die C₁ bis C₈-Alkylester, beispielsweise Methyl-, Ethyl-, n-Butyl-, t-Butyl-, n-Propyl-, n-Hexyl-, n-Octyl-, n-Lauryl-und 2-Ethylhexylester; Halogenalkylester, vorzugsweise Halogen-C₁-C₈-alkylester, wie Chlorethylacrylat sowie Mischungen dieser Monomeren. Besonders bevorzugt ist n-Butylacrylat.

Als Vernetzungsmittel (VI) für die Polyalkyl(meth)acrylatkautschuk-Komponente des Silikonacrylat-Kautschuks können Monomere mit mehr als einer polymerisierbaren Doppelbindung eingesetzt werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Propylenglykoldimethacrylat, 1,3-Butylenglykoldimethacrylat und 1,4-Butylenglykoldimethacrylat. Die Vernetzungsmittel können alleine oder in Gemischen aus mindestsens zwei Vernetzungsmitteln verwendet werden.
Beispielhafte und bevorzugte Pfropfmittel (VII) sind Allylmethacrylat, Triallylcyanurat, Triallylisocyanurat oder Mischungen hieraus. Allylmethacrylat kann auch als Vernetzungsmittel (VI) eingesetzt werden. Die Pfropfmittel können alleine oder in Gemischen aus mindestens zwei Pfropfmitteln verwendet werden.

Die Menge an Vernetzungsmittel (VI) und Pfropfmittel (VII) beträgt 0,1 bis 20 Gew.%, bezogen auf das gesamte Gewicht der Polyalkyl(meth)acrylatkautschuk-Komponente des Silikonacrylat-Kautschuks.

Der Silikonacrylat-Kompositkautschuk wird hergestellt, indem zunächst der Silikonkautschuk gemäß B.2.1 als wäßriger Latex hergestellt wird. Dieser Latex wird anschließend mit den zu verwendenden Methacrylsäurealkylestern und/oder Acrylsäurealkylestern, dem Vernetzungsmittel (VI) und dem Pfropfmittel (VII) angereichert, und eine Polymerisation wird durchgeführt.

Zur Herstellung der genannten Silikon-Acrylat-Komposit-Pfropfkautschuke werden die Monomere B.1 auf die Kautschuk-Grundlage B.2 aufgepfropft.

Dabei können die beispielsweise in EP 249964, EP 430134 und US 4888388 beschriebenen Polymerisationsmethoden angewendet werden.

Die als Komponente B genannten Silikon-Acrylat-Komposit-Pfropfkautschuke sind kommerziell erhältlich. Beispielhaft seien genannt: Metablen® SX 005, Metablen® S-2001 und Metablen® SRK 200 der Mitsubishi Rayon Co. Ltd.

In bevorzugter Ausführungsform beträgt der Anteil an Silikonkautschuk B.2.1 im Silikon-Acrylat-Kompositkautschuk B.2 mindestens 50 Gew.-%, weiter bevorzugt mindesten 70 Gew.-%, jeweils bezogen auf B.2.

### Komponente C

Als Komponente C wird erfindungsgemäß Bornitrid eingesetzt.

In den erfindungsgemäßen Zusammensetzungen kann das verwendete Bornitrid ein kubisches Bornitrid, ein hexagonales Bornitrid, ein amorphes Bornitrid, ein partiell kristallines Bornitrid, ein turbostratisches Bornitrid, ein wurtzitisches, ein rhomboedrisches Bornitrid und/oder eine weitere allotrope Form sein, wobei die hexagonale Form bevorzugt ist.

Die Herstellung von Bornitrid ist beispielsweise in den Schriften US 6,652,822 B2, US 2001/0021740 A1, US 5,898,009 A, US 6,048,511 A, US 2005/0041373 A1, US 2004/0208812 A1, US 6,951,583 B2 sowie in WO 2008/042446 A2 beschrieben.

Das Bornitrid wird in Form von Plättchen, Pulvern, Nanopulvern, Fasern sowie Agglomeraten oder einer Mischung zuvor genannter Formen verwendet.

Bevorzugt wird eine Mischung aus diskretem plättchenförmigen Bornitrid und Agglomeraten genutzt.

Ebenfalls bevorzugt werden Bornitride mit einer agglomerierten Partikelgröße (D50) Wert von 1 µm bis 100 µm, bevorzugt von 3 µm bis 60 µm, besonders bevorzugt von 5 µm bis 30 µm, ermittelt durch Laserbeugung, genutzt.

Bei der Laserbeugung werden Partikelgrößenverteilungen durch Messung der Winkelabhängigkeit der Intensität von gestreutem Licht eines Laserstrahls, der eine dispergierte Partikelprobe durchdringt, ermittelt. Hierbei wird die Mie-Theorie der Lichtstreuung zur Berechnung der Partikelgrößenverteilung verwendet. Als Messinstrument kann beispielsweise Microtac S3500 verwendet werden. Der D50Wert bedeutet, dass 50 Vol.-% aller vorkommenden Partikel in dem untersuchten Material kleiner sind als der angegebene Wert.

In einer weiteren Ausführungsform der vorliegenden Erfindung werden Bornitride mit einem D50 - Wert von 0,1 µm bis 50 µm, bevorzugt von 1 µm bis 30 µm, besonders bevorzugt von 3 µm bis 25 µm, ermittelt durch Laserbeugung wie oben beschrieben, genutzt, bevorzugt handelt es sich dabei um hexagonale Bornitride

Bornitride können mit unterschiedlichen Partikelgrößenverteilungen in den erfindungsmäßen Zusammensetzungen eingesetzt werden.

In einer weiteren Ausführungsform der vorliegenden Erfindung werden zwei Bornitride mit unterschiedlicher Partikelgrößenverteilung genutzt, wodurch eine bimodale Verteilung in der Zusammensetzung entsteht.

Der Kohlenstoffgehalt der verwendeten Bornitride beträgt ≤ 1 Gew.-%, bevorzugt ≤ 0,5 Gew.-%, besonders bevorzugt ≤ 0,2 Gew.-%.

Die Reinheit der Bornitride, das heißt der Anteil an reinem Bornitrid in dem jeweils genutzten Zuschlagstoff, beträgt mindestens 90 Gew.-%, bevorzugt mindestens 95 Gew.-% und weiterhin bevorzugt mindestens 97 Gew.-%.

Die erfindungsgemäß verwendeten Bornitride weisen eine Oberfläche, ermittelt nach dem BET (S. Brunauer, P. H. Emmett, E. Teller) - Bestimmungsverfahren nach DIN-ISO 9277 (Version DIN-ISO 9277:2014-01), von 0,1 m2/g bis 25 m2/g, bevorzugt 1,0 m2/g bis 10 m2/g und besonders bevorzugt 2 m²/g bis 9 m2/g auf.

Die Schüttdichte der Bornitride beträgt vorzugsweise ≤ 1 g/cm³, besonders bevorzugt ≤ 0,8 g/cm³ und ganz besonders bevorzugt ≤ 0,6 g/cm³.

Beispiele für kommerziell verwendbare Bornitride sind Boron Nitride Cooling Filler Platelets 009, Boron Nitride Cooling Filler Platelets 012 und Boron Nitride Cooling Filler Platelets 015/400 HR von 3M™ Technical Ceramics oder CoolFlow™ Boron Nitride Powder CF500 und CoolFlow™ Boron Nitride Powder CF600 Powder von Momentive Performance Materials. Weiterhin können die Bornitride an der Oberfläche modifiziert sein, wodurch die Verträglichkeit der Füllstoffe mit der erfindungsmäßen Zusammensetzung erhöht wird. Geeignete Modifikatoren sind unter anderen organische, beispielsweise Silicium-organische Verbindungen.

### Komponente D

Als Komponente D enthalten die thermoplastischen Formmassen einen mineralischen Füllstoff auf Basis von Talk.

Als mineralische Füllstoffe auf Basis von Talk im Sinne der Erfindung kommen alle teilchenförmigen Füllstoffe infrage, die der Fachmann mit Talk bzw. Talkum verbindet. Ebenfalls kommen alle teilchenförmigen Füllstoffe, die kommerziell angeboten werden und deren Produktbeschreibungen als charakterisierende Merkmale die Begriffe Talk bzw. Talkum enthalten, in Frage.

Es können auch Mischungen verschiedener mineralischer Füllstoffe auf Basis von Talk zum Einsatz kommen.

Erfindungsgemäß sind mineralische Füllstoffe, die einen Gehalt an Talk nach DIN 55920 (Version von 2006) von größer 80 Gew.-%, bevorzugt größer 95 Gew.-% und besonders bevorzugt größer 98 Gew.-%, bezogen auf die Gesamtmasse an Füllstoff aufweisen.

Unter Talk wird ein natürlich vorkommender oder synthetisch hergestellter Talk verstanden.
Bei reinem Talk handelt sich um ein Silikat mit Schichtstruktur.

Die als Komponente D zum Einsatz kommende Talksorten zeichnen sich aus durch eine besonders hohe Reinheit, gekennzeichnet durch einen MgO-Gehalt von 28 bis 35 Gew.-%, bevorzugt 30 bis 33 Gew.-%, besonders bevorzugt 30,5 bis 32 Gew.-% und einen SiO₂-Gehalt von 55 bis 65 Gew.-%, bevorzugt 58 bis 64 Gew.-%, besonders bevorzugt 60 bis 62,5 Gew.-%. Die besonders bevorzugten Talktypen zeichnen sich des Weiteren durch einen Al₂O₃-Gehalt von kleiner als 5 Gew.-%, besonders bevorzugt kleiner als 1 Gew.-%, insbesondere kleiner als 0,7 Gew.-%, aus.

Vorteilhaft und insofern bevorzugt ist insbesondere auch der Einsatz des erfindungsgemäßen Talkes in Form von feinvermahlenen Typen mit einer mittleren Teilchengröße dso von 0,2 bis 10 µm, bevorzugt 0,5 bis 5 µm, weiter bevorzugt 0,7 bis 2,5 µm, und besonders bevorzugt 1,0 bis 2,0 µm.

Die mittlere Teilchengröße dso ist der Durchmesser, oberhalb und unterhalb dessen jeweils 50 Gew.-% der Teilchen liegen. Es können auch Mischungen von Talk-Typen eingesetzt werden, die sich in ihrer mittleren Teilchengröße dso unterscheiden.
Die erfindungsgemäß einzusetzenden Talktypen haben bevorzugt eine obere Teilchen- bzw. Korngröße d₉₇ kleiner 50 µm, bevorzugt kleiner 10 µm, besonders bevorzugt kleiner 6 µm und insbesondere bevorzugt kleiner 2,5 µm. Die d₉₇- und d₅₀-Werte des Talks werden nach Sedimentationsanalyse mit Sedigraph 5100 (Micromeritics GmbH, Erftstrasse 43, 41238 Mönchengladbach, Deutschland) nach ISO 13317-1 und ISO 13317-3 (Version von 2000) bestimmt.

Der Talk kann oberflächenbehandelt, z.B. silanisiert sein, um eine bessere Verträglichkeit mit dem Polymer zu gewährleisten. Der Talk kann beispielsweise mit einem Haftvermittlersystem auf Basis funktionalisierter Silane ausgerüstet sein.

Im Hinblick auf die Verarbeitung und Herstellung der Formmassen ist auch der Einsatz kompaktierten Talks vorteilhaft.

Der eingesetzte Talk kann bedingt durch die Verarbeitung zur Formmasse bzw. zu Formkörpern in der Formmasse bzw. im Formkörper einen kleineren d₉₇- bzw. d₅₀-Wert aufweisen, als in der ursprünglich eingesetzten Form.

### Komponente E

Als Komponente E werden phosphorhaltige Flammschutzmittel eingesetzt.

Phosphorhaltige Flammschutzmittel im erfindungsgemäßen Sinne sind bevorzugt ausgewählt aus den Gruppen der mono- und oligomeren Phosphor- und Phosphonsäureester, Phosphazene sowie Salze der Phosphinsäure, wobei auch Mischungen von mehreren Verbindungen ausgewählt aus einer oder verschiedenen dieser Gruppen als Flammschutzmittel zum Einsatz kommen können. Auch andere hier nicht speziell erwähnte Phosphorverbindungen können alleine oder in beliebiger Kombination mit anderen Phosphorverbindungen eingesetzt werden.

Bevorzugte mono- und oligomere Phosphor- bzw. Phosphonsäureester sind Phosphorverbindungen der allgemeinen Formel (III) 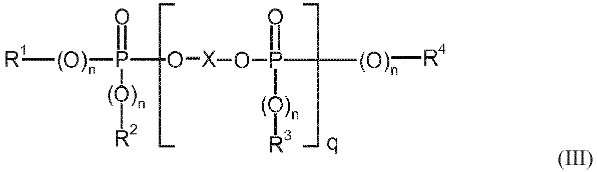 worin
R1, R2, R3 und R4, unabhängig voneinander jeweils gegebenenfalls halogeniertes C1 bis C8-Alkyl, jeweils gegebenenfalls durch Alkyl, vorzugsweise C1 bis C4-Alkyl, und/oder Halogen, vorzugsweise Chlor, Brom, substituiertes C5 bis C6-Cycloalkyl, C6 bis C20-Aryl oder C7 bis C12-Aralkyl,
n unabhängig voneinander, 0 oder 1
q 0 bis 30 und
X einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten.

Bevorzugt stehen R1, R2, R3 und R4 unabhängig voneinander für C1 bis C4-Alkyl, Phenyl, Naphthyl oder Phenyl-C1-C4-alkyl. Die aromatischen Gruppen R1, R2, R3 und R4 können ihrerseits mit Halogen- und/oder Alkylgruppen, vorzugsweise Chlor, Brom und/oder C1 bis C4-Alkyl substituiert sein. Besonders bevorzugte Aryl-Reste sind Kresyl, Phenyl, Xylenyl, Propylphenyl oder Butylphenyl sowie die entsprechenden bromierten und chlorierten Derivate davon.

X in der Formel (III) bedeutet bevorzugt einen ein- oder mehrkernigen aromatischen Rest mit 6 bis 30 C-Atomen. Dieser leitet sich bevorzugt von Diphenolen ab.

n in der Formel (III) kann, unabhängig voneinander, 0 oder 1 sein, vorzugsweise ist n gleich 1.

q steht für Werte von 0 bis 30. Bei Einsatz von Mischungen verschiedener Komponenten der Formel (III) können Mischungen vorzugsweise zahlengemittelte q-Werte von 0,3 bis 10, besonders bevorzugt 0,5 bis 10, insbesondere 1,05 bis 1,4 verwendet werden.

X steht besonders bevorzugt für 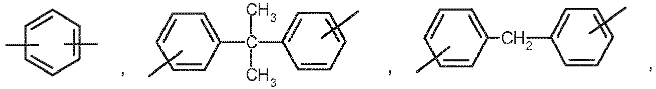 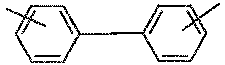 oder deren chlorierte oder bromierte Derivate, insbesondere leitet sich X von Resorcin, Hydrochinon, Bisphenol A oder Diphenylphenol ab. Besonders bevorzugt leitet sich X von Bisphenol A ab.

Als erfindungsgemäße Komponente C können Monophosphate (q=O), Oligophosphate (q=1-30) oder Mischungen aus Mono- und Oligophosphaten eingesetzt werden.

Monophosphorverbindungen der Formel (III) sind insbesondere Tributylphosphat, Tris-(2-chlorethyl)-phosphat, Tris-(2,3-dibromprobyl)-phosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, halogensubstituierte Arylphosphate, Methylphosphonsäuredimethylester, Methylphosphensäurediphenylester, Phenylphosphonsäurediethylester, Triphenylphosphinoxid oder Trikresylphosphinoxid.

Höchst bevorzugt als Komponente D ist Bisphenol-A basierendes Oligophosphat gemäß Formel (IIIa).

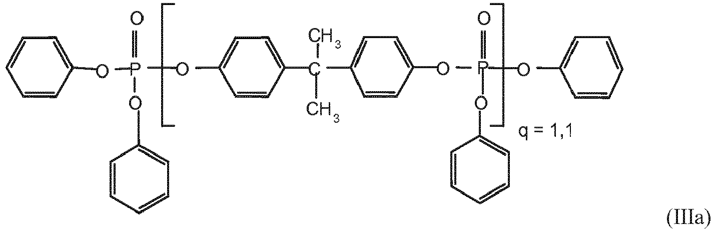

Die Phosphorverbindungen gemäß Formel (III) sind bekannt (vgl. z.B. EP-A 363 608, EP-A 640 655) oder lassen sich nach bekannten Methoden in analoger Weise herstellen (z.B. Ullmanns Enzyklopädie der technischen Chemie, Bd. 18, S. 301 ff. 1979; Houben-Weyl, Methoden der organischen Chemie, Bd. 12/1, S. 43; Beilstein Bd. 6, S. 177).

Die mittleren q-Werte können bestimmt werden, indem mittels geeigneter Methode (Gaschromatographie (GC), High Pressure Liquid Chromatography (HPLC), Gelpermeationschromatographie (GPC)) die Zusammensetzung der Phosphat-Mischung (Molekulargewichtsverteilung) bestimmt wird und daraus die Mittelwerte für q berechnet werden.

Phosphazene sind Verbindungen der Formeln (IVa) und (IVb) 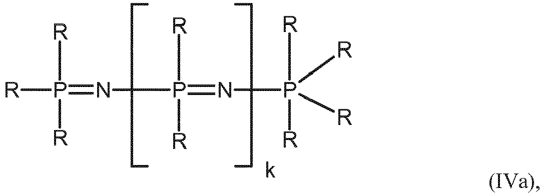 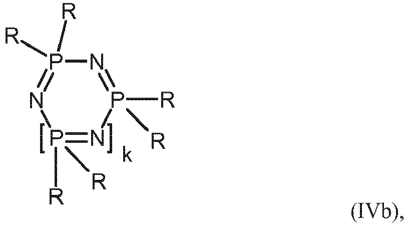 worin
R jeweils gleich oder verschieden ist und für Amino, jeweils gegebenenfalls halogeniertes, vorzugsweise mit Fluor halogeniertes C1 bis C8-Alkyl, oder C1 bis C8-Alkoxy, jeweils gegebenenfalls durch Alkyl, vorzugsweise C1 bis C4-Alkyl, und/oder Halogen, vorzugsweise Chlor und/oder Brom, substituiertes C5 bis C6-Cycloalkyl, C6 bis C20-Aryl, vorzugsweise Phenyl oder Naphthyl, C6 bis C20-Aryloxy, vorzugsweise Phenoxy, Naphthyloxy, oder C7 bis C12-Aralkyl, vorzugsweise Phenyl-C1-C4-alkyl, steht,
k für 0 oder eine Zahl von 1 bis 15, vorzugsweise für eine Zahl von 1 bis 10 steht.

Beispielhaft seien Propoxyphosphazen, Phenoxyphosphazen, Methylphenoxyphosphazen, Aminophosphazen und Fluoralkylphosphazene genannt. Bevorzugt ist Phenoxyphosphazen.

Die Phosphazene können allein oder als Mischung eingesetzt werden. Der Rest R kann immer gleich sein oder 2 oder mehre Reste in den Formeln (IVa) und (IVb) können verschieden sein. Phosphazene und deren Herstellung sind beispielsweise in EP-A 728 811, DE-A 1 961668 und WO 97/40092 beschrieben.

Unter dem Salz einer Phosphinsäure im erfindungsgemäßen Sinne ist das Salz einer Phosphinsäure mit einem beliebigen Metallkation zu verstehen. Es können auch Mischungen von Salzen eingesetzt werden, die sich in Ihrem Metallkation unterscheiden. Bei den Metallkationen handelt es sich um die Kationen Metalle der 1. Hauptgruppe (Alkalimetalle, vorzugsweise Li⁺, Na⁺, K⁺), der 2. Hauptgruppe (Erdalkalimetalle; vorzugsweise Mg²⁺, Ca²⁺, Sr²⁺, Ba²⁺, besonders bevorzugt Ca²⁺) oder der 3. Hauptgruppe (Elemente der Borgruppe; vorzugsweise Al³⁺) und/oder der 2., 7. oder 8. Nebengruppe (vorzugsweise Zn²⁺, Mn²⁺, Fe²⁺, Fe³⁺) des Periodensystems ist.

Vorzugsweise wird ein Salz oder eine Mischung von Salzen einer Phosphinsäure der Formel (V) eingesetzt, 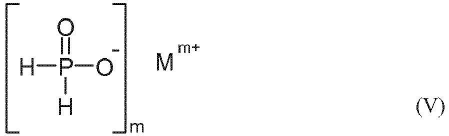 worin M^{m+} ein Metallkation der 1. Hauptgruppe (Alkalimetalle; m = 1), 2. Hauptgruppe (Erdalkalimetalle; m = 2) oder der 3. Hauptgruppe (m = 3) oder der 2., 7. oder 8. Nebengruppe (wobei m eine ganze Zahl von 1 bis 6, bevorzugt 1 bis 3 und besonders bevorzugt 2 oder 3 bedeutet) des Periodensystems ist.

Besonders bevorzugt sind in Formel (V)
für m = 1 die Metallkationen M⁺ = Li⁺, Na⁺, K⁺,
für m = 2 die Metallkationen M²⁺ = Mg²⁺, Ca²⁺,Sr²⁺, Ba²⁺ und
für m = 3 die Metallkationen M³⁺ = Al³⁺,
höchst bevorzugt ist Ca²⁺ (m = 2).

In einer bevorzugten Ausführungsform ist die mittlere Teilchengröße d₅₀ des Phosphinsäuresalzes (Komponente C) kleiner als 80 µm, vorzugsweise kleiner als 60 µm, besonders bevorzugt ist d₅₀ zwischen 10 µm und 55 µm. Die mittlere Teilchengröße dso ist der Durchmesser, oberhalb und unterhalb dessen jeweils 50 Gew.-% der Teilchen liegen. Es können auch Mischungen von Salzen eingesetzt werden, die sich in ihrer mittleren Teilchengröße dso unterscheiden.

### Komponente F

Die Zusammensetzung kann als Komponente F weitere handelsübliche Polymeradditive verschieden von der Komponente B enthalten, wobei insbesondere und bevorzugt Additive ausgewählt aus der Gruppe der Flammschutzsynergisten (beispielsweise nanoskalige Metalloxide), Antidrippingmittel, Rauchinhibitoren (beispielsweise Zinkborat), Gleit- und Entformungsmittel (beispielsweise Pentaerythrittetrastearat), Nukleiermittel, Antistatika, Leitfähigkeitsadditive, Stabilisatoren (z.B. Hydrolyse-, Wärmealterungs- und UV-Stabilisatoren sowie Umesterungsinhibitoren und Säure-/Basenquencher), Fließfähigkeitspromotoren, Verträglichkeitsvermittler, weitere von Komponente C verschiedene Schlagzähigkeitsmodifikatoren (sowohl mit als auch ohne Kern-Schale-Struktur), weitere polymere Bestandteile (beispielsweise funktionelle Blendpartner), von Komponente D verschiedene Füll- und Verstärkungsstoffe (beispielsweise Karbonfasern, Glimmer, Kaolin, CaCO₃) sowie Farbstoffe und Pigmente (beispielsweise Titandioxid oder Eisenoxid) in Frage kommen.Es können auch Mischungen verschiedener Additive eingesetzt werden.
Bevorzugt wird als eines der Additive Zinkborathydrat (Zn₂B₆O₁₁ • 3,5 H₂O) als Rauchinhibitor eingesetzt.

In weiter bevorzugter Ausführungsform enthält die Zusammensetzung mindestens ein Polymeradditiv ausgewählt aus der Gruppe bestehend aus Antidrippingmitteln, Rauchinhibitoren, Stabilisatoren, Farbstoffen und Pigmenten.

Als Antidrippingmittel können beispielsweise Polytetrafluorethylen (PTFE) oder PTFE-haltige Zusammensetzungen, wie beispielsweise Masterbatche von PTFE mit styrol- oder methylmethacrylat enthaltenden Polymeren oder Copolymeren, als Pulver oder als koagulierte Mischung, z.B. mit Komponente B, eingesetzt.

In bevorzugter Ausführungsform enthält die Zusammensetzung als Entformungsmittel Pentaerythrittetrastearat.

In bevorzugter Ausführungsform enthält die Zusammensetzung als Stabilisator mindestens einen Vertreter ausgewählt aus der Gruppe bestehend aus sterisch gehinderten Phenolen, organischen Phosphiten, Schwefel-basierten Co-Stabilisatoren und organischen sowie anorganischen Brönstedt-Säuren.

In besonders bevorzugter Ausführungsform enthält die Zusammensetzung als Stabilisator mindestens einen Vertreter ausgewählt aus der Gruppe bestehend aus Octadecyl 3-(3,5-di-tert-butyl-4-hydroxyphenyl)propionat und Tris(2,4-di-tert-butylphenyl)phosphit.

### Herstellung der Formmassen und Formkörper

Aus den erfindungsgemäßen Zusammensetzungen können thermoplastische Formmassen hergestellt werden.
Die erfindungsgemäßen thermoplastischen Formmassen können beispielsweise hergestellt werden, indem man die jeweiligen Bestandteile der Zusammensetzungen in bekannter Weise vermischt und bei Temperaturen von bevorzugt 200°C bis 320°C, besonders bevorzugt bei 240 bis 300°C in üblichen Aggregaten wie beispielsweise Innenknetern, Extrudern und Doppelwellenschnecken schmelzcompoundiert und schmelzextrudiert.
Dieser Prozess wird im Rahmen dieser Anmeldung allgemein als Compoundieren bezeichnet.
Unter Formmasse wird also das Produkt verstanden, das erhaltend wird, wenn die Bestandteile der Zusammensetzung schmelzcompoundiert und schmelzextrudiert werden.

Die Vermischung der einzelnen Bestandteile der Zusammensetzungen kann in bekannter Weise sowohl sukzessive als auch simultan erfolgen, und zwar sowohl bei etwa 20°C (Raumtemperatur) als auch bei höherer Temperatur. Das bedeutet, dass beispielsweise manche der Bestandteile über den Haupteinzug eines Extruders dosiert und die restlichen Bestandteile über einen Seitenextruder später im Compoundierverfahren zugeführt werden können.

Gegenstände der Erfindung sind auch ein Verfahren zur Herstellung der erfindungsgemäßen Formmassen und die Verwendung der Formmassen zur Herstellung von Formkörpern.

Die erfindungsgemäßen Formmassen können zur Herstellung von Formkörpern jeder Art verwendet werden. Diese können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien. Besonders eignen sich die erfindungsgemäßen Formmassen zur Verarbeitung in Extrusions-, Blasform- und Tiefziehverfahren.
Es ist auch möglich, die Bestandteile der Zusammensetzungen direkt in eine Spritzgussmaschine oder in ein Extrusionsaggregat zu dosieren und zu Formkörper zu verarbeiten.

Beispiele für solche Formkörper, die aus den erfindungsgemäßen Zusammensetzungen und Formmassen hergestellt werden können, sind Folien, Profile, Gehäuseteile jeder Art, z.B. für Haushaltsgeräte wie Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen und Bauteile für Nutzfahrzeuge, insbesondere für den Automobilbereich. Die erfindungsgemäßen Zusammensetzungen und Formmassen eignen sich auch zur Herstellung von folgenden Formkörpern oder Formteilen: Schiffe, Flugzeuge, Busse und andere Kraftfahrzeuge, Karosserieteile für Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen, wärmeisolierte Transportbehältnisse, Formteile für Sanitär- und Badausrüstungen, Abdeckgitter für Lüfteröffnungen und Gehäuse für Gartengeräte.
Besonders geeignet sind die Formkörper für Innenausbauteile für Schienenfahrzeuge.

Nachfolgend werden weitere Ausführungsformen 1 bis 25 der vorliegenden Erfindung beschrieben:
1. Zusammensetzung zur Erzeugung einer thermoplastischen Formmasse, wobei die Zusammensetzung folgende Bestandteile enthält oder aus diesen besteht:
   A) 50-90 Gew.-% aromatisches Polycarbonat oder Polyestercarbonat mit einer relativen Lösungsviskosität von mindestens 1,285 gemessen in CH₂Cl₂ als Lösungsmittel bei 25°C und einer Konzentration von 0,5 g/100 ml
   B) 1-10 Gew.-% kautschukmodifiziertes Pfropfpolymerisat,
   C) 2,5-10 Gew.-% Bornitrid,
   D) 4-20 Gew.-% Talk,
   E) 2-20 Gew.-% phosphorhaltiges Flammschutzmittel
   F) 0-20 Gew.-% weitere Additive.
2. Zusammensetzung gemäß Ausführungsform 1, wobei als Komponente A verzweigtes Polycarbonat auf Basis von Bisphenol-A eingesetzt wird.
3. Zusammensetzung gemäß Ausführungsform 1 oder 2, wobei die Komponente A eine relative Lösungsviskosität von 1,285 bis 1,40 gemessen in CH₂Cl₂ als Lösungsmittel bei 25°C und einer Konzentration von 0,5 g/100 ml aufweist.
4. Zusammensetzung gemäß Ausführungsform 1 oder 2, wobei die Komponente A eine relative Lösungsviskosität von 1,29 bis 1,36 gemessen in CH₂Cl₂ als Lösungsmittel bei 25°C und einer Konzentration von 0,5 g/100 ml aufweist.
5. Zusammensetzung gemäß einer der vorherigen Ausführungsformen, enthaltend als Komponente B ein oder mehrere Pfropfpolymerisate von
   B.1 5 bis 95 Gew.-%, wenigstens eines Vinylmonomeren auf
   B.2 95 bis 5 Gew.-% wenigstens einer Pfropfgrundlage ausgewählt aus der Gruppe bestehend aus Dienkautschuke, EP(D)M-Kautschuke, Acrylat-, Polyurethan-, Silikon-, Chloropren- und Ethylen/Vinylacetat-Kautschuke sowie Silikon/Acrylat Kompositkautschuke
6. Zusammensetzung gemäß Ausführungsform 5, wobei der Anteil von B.1 in der Komponente B 10 bis 60 Gew.-% und der Anteil der Komponente B.2 90 bis 40 Gew.-%, jeweils bezogen auf die Komponente B, beträgt.
7. Zusammensetzung gemäß einer der Ausführungsformen 5 oder 6, wobei die Pfropfgrundlage B.2 ein Silikonacrylat-Komposit-Kautschuk aus sich gegenseitig durchdringendem Silikonkautschuk- und Polyalkyl(meth)acrylat-kautschuk ist, wobei der Anteil an Silikonkautschuk 50 - 95 Gew.-% bezogen auf B.2 beträgt.
8. Zusammensetzung gemäß einer der vorherigen Ausführungsformen, wobei als Komponente C hexagonales Bornitrid eingesetzt wird.
9. Zusammensetzung gemäß einer der vorherigen Ausführungsformen, wobei die Komponente C eine mittlere Teilchengröße D50 von 0,1 bis 50 µm ermittelt durch Laserbeugung aufweist.
10. Zusammensetzung gemäß einer der vorherigen Ausführungsformen, wobei die Komponente C eine mittlere Teilchengröße D50 von 3 bis 25 µm ermittelt durch Laserbeugung aufweist.
11. Zusammensetzung gemäß einer der vorherigen Ausführungsformen, wobei das Bornitrid einen Kohlenstoffgehalt von ≤ 0,2 Gew.-% aufweist.
12. Zusammensetzung gemäß einer der vorherigen Ausführungsformen, wobei das Bornitrid eine Reinheit von mindestens 97 Gew.-% aufweist.
13. Zusammensetzung gemäß einer der vorherigen Ausführungsformen, wobei das Bornitrid eine BET Oberfläche von 2 m²/g bis 9 m2/g aufweist.
14. Zusammensetzung gemäß einer der vorherigen Ausführungsformen, wobei die Komponente D eine mittlere Teilchengröße d₅₀ von 0,7 bis 2,5 µm ermittelt durch Sedimentationsanalyse aufweist.
15. Zusammensetzung gemäß einer der vorherigen Ausführungsformen, wobei die Komponente D eine mittlere Teilchengröße dso von 1,0 bis 2,0 µm ermittelt durch Sedimentationsanalyse aufweist.
16. Zusammensetzung gemäß einem der vorherigen Ansprüche, wobei als Komponente E mindestens ein Flammschutzmittel ausgewählt aus der Gruppe, die Oligophosphat, Phosphazen und Salze der Phosphinsäure umfasst, eingesetzt wird.
17. Zusammensetzung gemäß Ausführungsform 16, wobei als Komponente E eine Verbindung mit folgender Struktur eingesetzt wird: 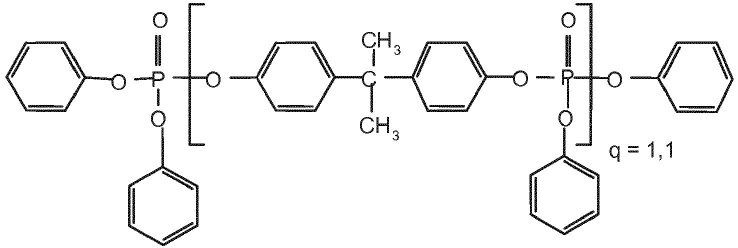
18. Zusammensetzung gemäß einer der vorherigen Ausführungsformen, enthaltend als Komponente F mindestens einen Zusatzstoff ausgewählt aus der Gruppe, die Gleit- und Entformungsmittel, Antidrippingmittel, Nukleiermittel, Antistatika, Leitfähigkeitsadditive, Stabilisatoren, Fließfähigkeitspromotoren, Verträglichkeitsvermittler, weitere von Komponente B verschiedene Schlagzähigkeitsmodifikatoren, weitere polymere Blendpartner, von Komponente D verschiedene Füll- und Verstärkungsstoffe sowie Farbstoffe und Pigmente umfasst.
19. Zusammensetzung gemäß einer der vorherigen Ausführungsformen, enthaltend als Komponente F Zinkborathydrat Zn₂B₆O₁₁ • 3,5 H₂O.
20. Zusammensetzung gemäß einer der vorherigen Ausführungsformen, enthaltend oder bestehend aus
   55-80 Gew.-% der Komponente A,
   1-8 Gew.-% der Komponente B,
   2,5-8 Gew.-% der Komponente C
   5-15 Gew.-% der Komponente D
   3-15 Gew.-% der Komponente E
   0,1 - 10 Gew.-% der Komponente F.
21. Zusammensetzung gemäß einer der vorherigen Ausführungsformen, enthaltend oder bestehend aus
   60-75 Gew.-% der Komponente A,
   1-6 Gew.-% der Komponente B,
   3-6 Gew.-% der Komponente C
   6-13 Gew.-% der Komponente D
   5-13 Gew.-% der Komponente E
   0,3- 6 Gew.-% der Komponente F.
22. Zusammensetzung gemäß einer der vorherigen Ausführungsformen, dadurch gekennzeichnet, dass die Zusammensetzung nur aus den Komponenten A) bis F) besteht.
23. Verwendung einer Zusammensetzung gemäß einer der Ausführungsformen 1 bis 22 zur Herstellung von spritzgegossenen oder thermogeformten Formkörpern.
24. Formkörper erhältlich einer Zusammensetzungen gemäß einer der Ausführungsformen 1 bis 22.
25. Formkörper gemäß Ausführungsform 24 mit einem Zug-E-Modul von mindestens 4000 MPa gemessen nach ISO 527, einer Wärmefreisetzung nach ISO 5660-1 von höchstens 90 kW/m² einer Rauchgasdichte nach ISO 5659-2 von Ds(4) höchstens 300 und VOF4 von höchstens 600 sowie einer Zeit bis zum Bruch im ESC Test in Rapsöl bei einer Randfaserdehnung von 2,4 % von mindestens zwei Stunden.

### Beispiele

### Komponente A-1

Verzweigtes Polycarbonat auf Basis Bisphenol A mit einer relativen Lösungsviskosität von ηᵣₑₗ = 1,325, gemessen in CH₂Cl₂ als Lösungsmittel bei 25°C und einer Konzentration von 0,5 g/100 ml, welches durch Einsatz von 0,4 Gew.-% THPE (1,1,1-Tris(p-hydroxyphenyl)ethan) bezogen auf die Summe aus Bisphenol A und THPE verzweigt wurde.

### Komponente A-2

Lineares Polycarbonat auf Basis Bisphenol A mit einer relativen Lösungsviskosität von ηᵣₑₗ = 1,32, gemessen in CH₂Cl₂ als Lösungsmittel bei 25°C und einer Konzentration von 0,5 g/100 ml.

### Komponente A-3

Lineares Polycarbonat auf Basis Bisphenol A mit einer relativen Lösungsviskosität von ηᵣₑₗ = 1,29, gemessen in CH₂Cl₂ als Lösungsmittel bei 25°C und einer Konzentration von 0,5 g/100 ml.

### Komponente A-4

Lineares Polycarbonat auf Basis Bisphenol A mit einer relativen Lösungsviskosität von ηᵣₑₗ = 1,28, gemessen in CH₂Cl₂ als Lösungsmittel bei 25°C und einer Konzentration von 0,5 g/100 ml.

### Komponente B-1

Schlagzähmodifikator, Pfropfpolymerisat von
B-1.1 11 Gew.-% Methylmethacrylat auf
B-1.2 89 Gew.-% eines Silikonacrylat-Komposit-Kautschukes als Pfropfgrundlage, wobei der Silikonacrylat-Kautschuk
   B-1.2.1 92 Gew.-% Silikonkautschuk und
   B-1.2.2 8 Gew.-% Polyalkyl(meth)acrylatkautschuk enthält, und
   wobei sich die beiden genannten Kautschuk-Komponenten B.2.1 und B.2.2 im Komposit-Kautschuk gegenseitig durchdringen, so dass sie sich nicht wesentlich voneinander trennen lassen.

### Komponente B-2

Schlagzähmodifikator, Pfropfpolymerisat von
B-2.1 17 Gew.-% Methylmethacrylat auf
B-2.2 83 Gew.-% eines Silikonacrylat-Komposit-Kautschukes als Pfropfgrundlage, wobei der Silikonacrylat-Kautschuk
   B-2.2.1 11 Gew.-% Silikonkautschuk- und
   B-2.2.2 89 Gew.-% Polyalkyl(meth)acrylatkautschuk enthält, und
   wobei sich die beiden genannten Kautschuk-Komponenten B.2.1 und B.2.2 im Komposit-Kautschuk gegenseitig durchdringen, so dass sie sich nicht wesentlich voneinander trennen lassen.

### Komponente B-3

Schlagzähmodifikator, ABS-Pfropfpolymerisat mit Kern-Schale-Struktur, hergestellt durch Emulsions-Polymerisation von 43 Gew.-% bezogen auf das ABS-Polymerisat einer Mischung aus 27 Gew.-% Acrylnitril und 73 Gew.-% Styrol in Gegenwart von 57 Gew.-% bezogen auf das ABS-Polymerisat eines teilchenförmig vernetzten Polybutadienkautschuks (mittlerer Teilchendurchmesser d₅₀ = 0,35 µm).

### Komponente B-4

Schlagzähmodifikator, MBS-Pfropfpolymerisat mit Kern-Schale-Struktur, hergestellt durch Emulsions-Polymerisation von 24 Gew.-% Methylmethacrylat in Gegenwart von 76 Gew.-% bezogen auf das MBS-Polymerisat eines teilchenförmig vernetzten Copolymerisats aus 88 Gew.-% Butadien und 12 Gew.-% Styrol.

### Komponente B-5

Schlagzähmodifikator, MB-Pfropfpolymerisat mit Kern-Schale-Struktur, hergestellt durch Emulsions-Polymerisation von 25 Gew.-% Methylmethacrylat in Gegenwart von 75 Gew.-% bezogen auf das MB-Polymerisat eines teilchenförmig vernetzten Polybutadienkautschuks.

### Komponente B-6

Schlagzähmodifikator, Pfropfpolymerisat mit Kern-Schale-Struktur, hergestellt durch Emulsions-Polymerisation von 40 Gew.-% Methylmethacrylat in Gegenwart von 60 Gew.-% bezogen auf das Pfropfpolymerisat eines teilchenförmig vernetzten Poly-n-butylacrylatkautschuks (mittlerer Teilchendurchmesser d₅₀ = 0,50 µm).

### Komponente C

Hexagonales Bornitrid; (BN, CAS No. 10043-11-5) mit einer mittleren Teilchengröße D50 = 16 µm, einer Reinheit von > 97 Gew.-%, einem Kohlenstoffgehalt von < 0,1 Gew.-% und einer BET Oberfläche von 8 m²/g.

### Komponente D

Talk, Jetfine 3CA der Firma Imerys mit einem MgO-Gehalt von 32 Gew.-%, einem SiO₂-Gehalt von 61 Gew.-% und einem Al₂O₃-Gehalt von 0,3 Gew.-%, mittlere Teilchengröße dso = 1,0 µm.

### Komponente E-1

Bisphenol-A basierendes Oligophosphat mit 8,9 Gew. % Phosphorgehalt.

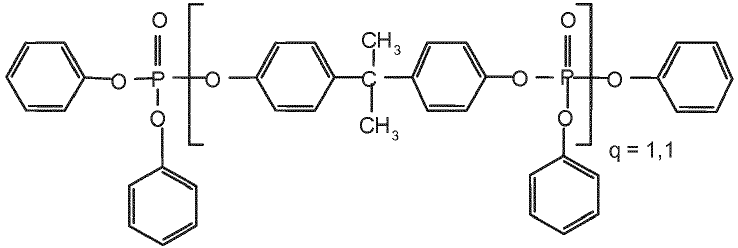

### Komponente E-2

Phenoxyphosphazen der Formel (a) mit 70 Gew.-% n = 1 und 30 Gew.-% n = 2 - 10.

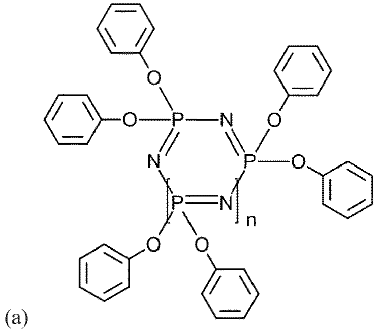

### Komponente E-3

Phoslite MB 9545, Masterbatch aus 45 Gew.-% Calciumphosphinat und 55 Gew.-% aromatischem, Bisphenol-A-basiertem Polycarbonat (Hersteller:Italmatch Chemicals).

### Komponente F-1

Zinkborathydrat (Zn₂B₆O₁₁ • 3,5 H₂O, CAS No. 138265-88-0)

### Komponente F-2

Teflon PTFE CFP 6000 X, Polytetrafluorethylen-Pulver (Hersteller: Chemours)

### Komponente F-3

Pentaerythrittetrastearat als Gleit-/Entformungsmittel

### Komponente F-4

Thermostabilisator, Irganox™ B900

(Gemisch aus 80% Irgafos® 168 (Tris(2,4-di-tert-butyl-phenyl)-phosphit) und 20% Irganox™ 1076 (2,6-Di-tert-butyl-4-(octadecanoxycarbonylethyl)phenol) (Hersteller: BASF AG)

### Herstellung und Prüfung der Formmassen

Auf einem Zweischneckenextruder (ZSK-25) (Fa. Werner und Pfleiderer) werden die in Tabelle 1 aufgeführten Einsatzstoffe bei einer Drehzahl von 225 Upm und einem Durchsatz von 20 kg/h bei einer Maschinentemperatur von 260°C compoundiert und granuliert.

Die fertigen Granulate werden auf einer Spritzgussmaschine zu den entsprechenden Probekörpern verarbeitet (Massetemperatur 240°C, Werkzeugtemperatur 80°C, Fließfrontgeschwindigkeit 240 mm/s).

Die Charakterisierung erfolgt gemäß ISO 180/1U (Version von 1982, Izod-Schlagzähigkeit), ISO 527 (Version von 1996, Zug-E-Modul), ISO 306 (Version von 2013, Vicat-Erweichungstemperatur, Verfahren B mit 50 N Belastung und einer Heizrate von 120 K/h), ISO 11443 (Version von 2014, Schmelzeviskosität) und ISO 1133 (Version von 2012, Schmelze-Volumen-Fließrate/ melt volumeflow rate (MVR) bei 260°C/5kg). Als Maß für die Chemikalienbeständigkeit der hergestellten Zusammensetzungen dient der Environmental Stress Cracking (ESC)-Test nach DIN EN ISO 22088 (Version von 2006), der wie folgt durchgeführt wird: Mit Rapsöl als Testmedium, Exposition bei 2,4% Randfaserdehnung, d.h. es wird die Zeitdauer ermittelt und angegeben, bei der Bruch des Probekörpers (Prüfstab der Dimension 80x10x4 mm) auftritt.

Die Prüfung der Wärmefreisetzung erfolgt an 3 mm dicken Prüfkörpern nach ISO 5660-1:2015 (Cone-Kalorimeter) bei 50kW/m² Bestrahlungsstärke, dabei wird der MARHE-Wert ermittelt (MARHE = Maximum Average Rate of Heat Emission). Für eine Einstufung in Hazard-Level 2 (HL2) nach Anforderungssatz R1/R6 der Europäischen Schienenfahrzeugnorm EN45545-2:2013 darf ein MARHE-Wert von 90 kW/m² nicht überschritten werden.

Die Rauchgasentwicklung wird an 3 mm dicken Prüfkörpern entsprechend ISO 5659-2:2006 bei einer Bestrahlungsstärke von 50 kW/m² ohne Zündflamme gemessen, zur Bestimung von Ds(4) und VOF 4. Für eine Einstufung in Hazard-Level 2 (HL2) nach Anforderungssatz R1/R6 der Europäischen Schienenfahrzeugnorm EN45545-2:2013 darf ein Ds(4)-Wert von 300 und ein VOF 4 - Wert von 600 min nicht überschritten werden.

Aus Tabelle 1 ist ersichtlich, dass die Zusammensetzungen der Beispiele 3 - 7, 9 - 11, 14 - 21 und 24 - 35 die erfindungsgemäße Aufgabe lösen, d.h. eine Kombination aus hohem E-Modul (mindestens 4000 MPa) und guter Chemikalienbeständigkeit (Zeit bis zum Bruch gegen Rapsöl mindestens 2h, bei 2,4% Randfaserdehnung) bei gleichzeitig niedriger Wärmefreisetzung nach ISO 5660-1:2015 (MARHE max. 90 kW/m²) und geringer Rauchgasdichte nach ISO 5659-2:2006 (Ds(4) max. 300 und VOF4 max. 600 min).

Die Eigenschaften der Zusammensetzungen der Beispiele 1 - 5 zeigen, dass mindestens 2,5 Gew.-% Bornitrid enthalten sein müssen.

Die Beispiele 5 - 8 zeigen, dass neben verzweigtem auch lineares Polycarbonat auf Basis Bisphenol A eingesetzt werden kann, wenn es eine größere relative Lösungsviskosität besitzt als ηᵣₑₗ = 1,28, gemessen in CH₂Cl₂ als Lösungsmittel bei 25°C und einer Konzentration von 0,5 g/100 ml.

Beispiele 9 - 13 zeigen, dass mindestens 1,0 Gew.-% eines Schlagzähmodifikators eingesetzt werden muss, wobei die chemische Natur des Schlagzähmodifikators variabel ist (Beispiele 14 - 18).

Die Eigenschaften der Zusammensetzungen der Beispiele 19 - 23 zeigen, dass mindestens 4 Gew.-% Talk eingesetzt werden müssen. Der Einsatz von Zinkborathydrat ist optional (Beispiele 24 - 27).

Beispiele 28 - 35 zeigen, dass sowohl der Gehalt als auch die chemische Natur des phosphorhaltigen Flammschutzmittels variabel sind.

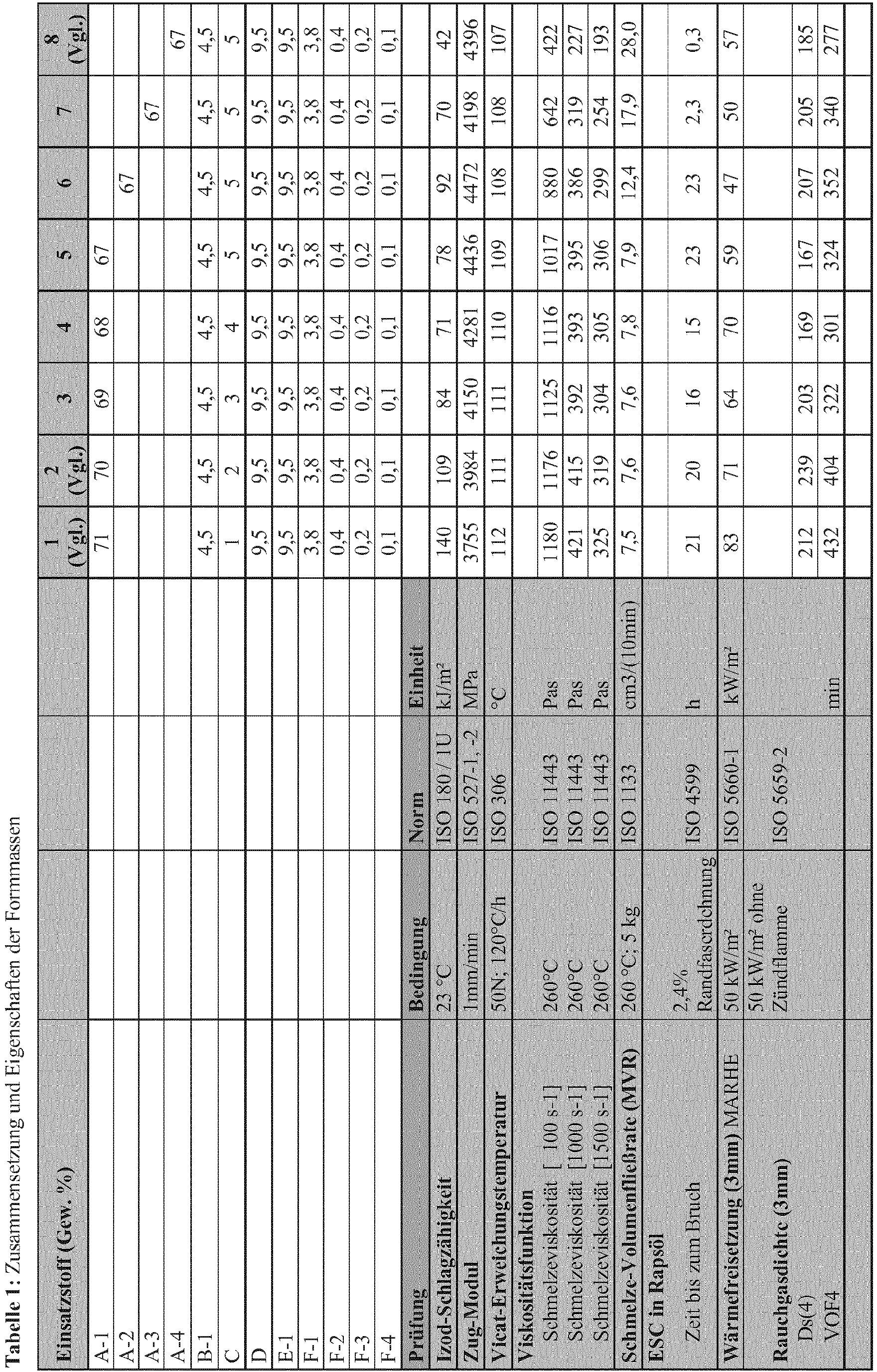

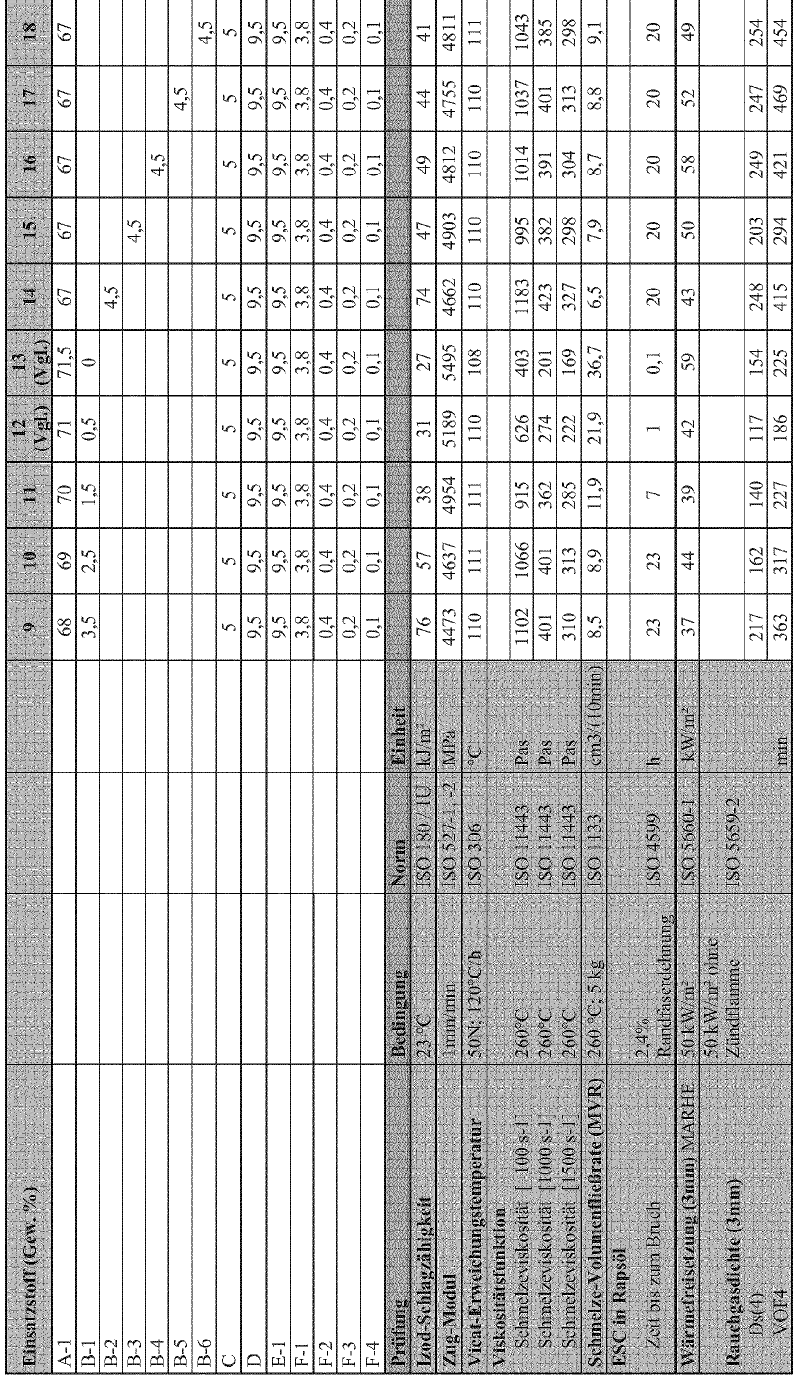

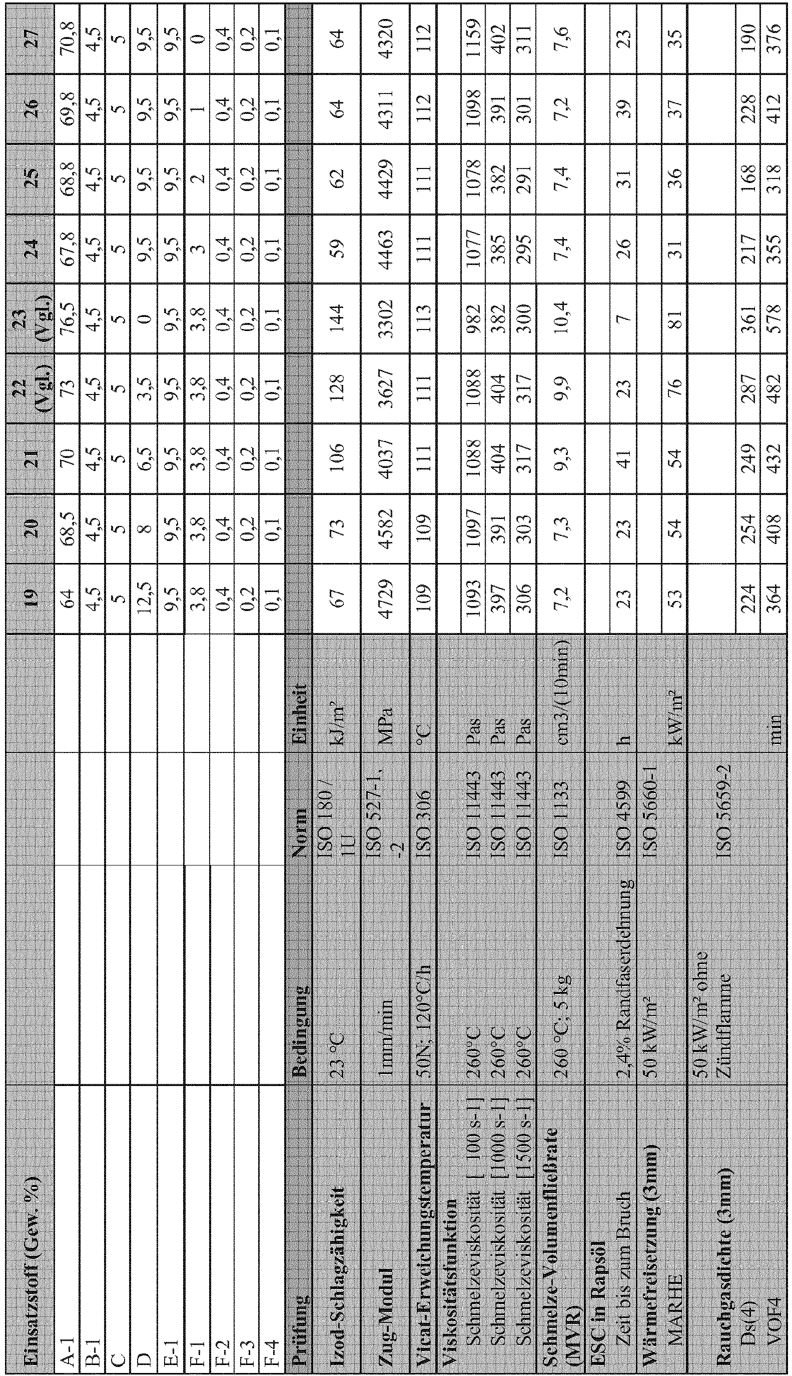

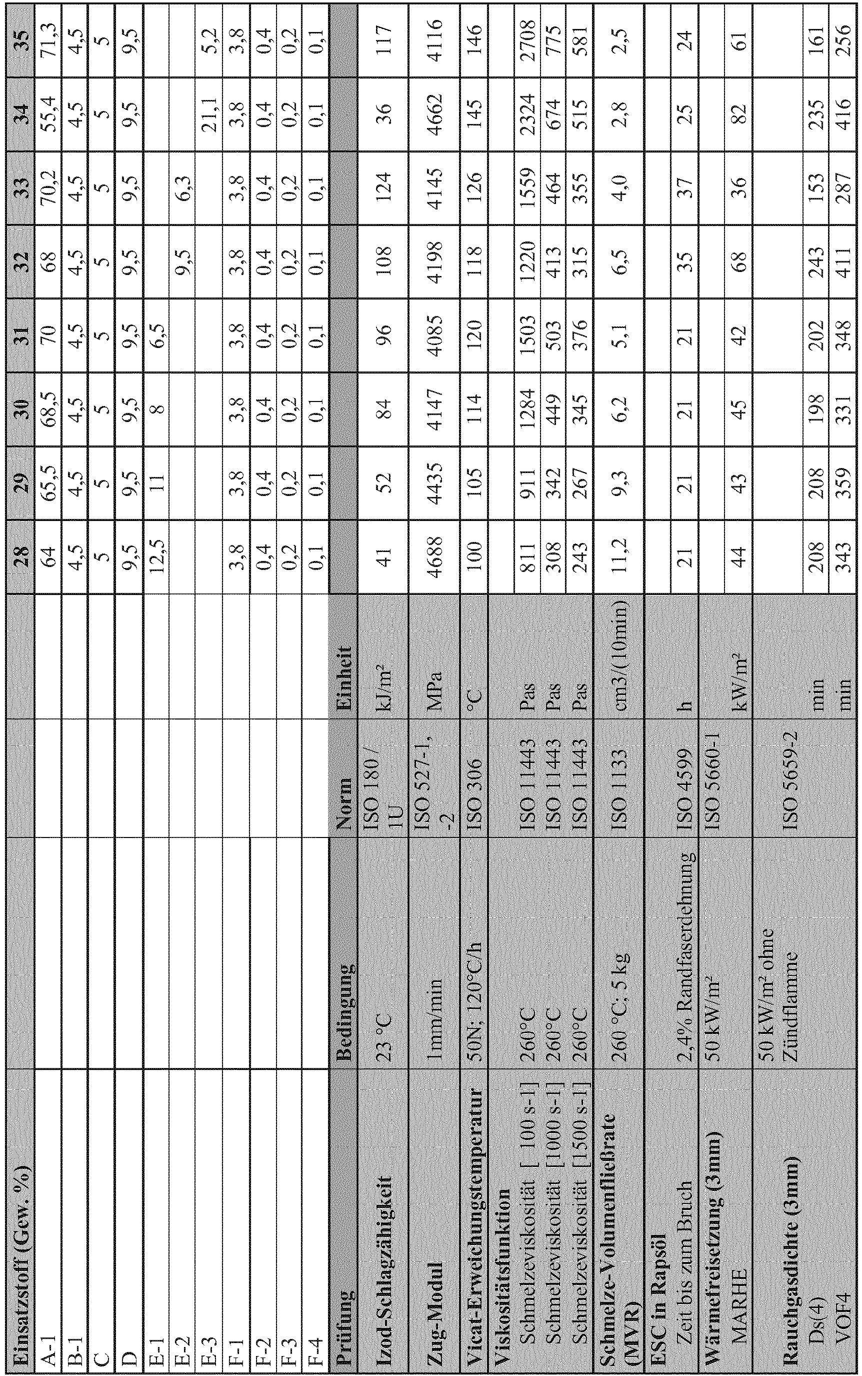

## Patentansprüche

1. Zusammensetzung zur Erzeugung einer thermoplastischen Formmasse, wobei die Zusammensetzung folgende Bestandteile enthält oder aus diesen besteht:
A) 50-90 Gew.-% aromatisches Polycarbonat oder Polyestercarbonat mit einer relativen Lösungsviskosität von mindestens 1,285 gemessen in CH₂Cl₂ als Lösungsmittel bei 25°C und einer Konzentration von 0,5 g/100 ml
B) 1-10 Gew.-% kautschukmodifiziertes Pfropfpolymerisat,
C) 2,5-10 Gew.-% Bomitrid,
D) 4-20 Gew.-% Talk,
E) 2-20 Gew.-% phosphorhaltiges Flammschutzmittel
F) 0-20 Gew.-% weitere Additive.

2. Zusammensetzung gemäß Anspruch 1, wobei als Komponente A verzweigtes Polycarbonat auf Basis von Bisphenol-A eingesetzt wird.

3. Zusammensetzung gemäß Anspruch 1 oder 2, enthaltend als Komponente B ein oder mehrere Pfropfpolymerisate von
B.1 5 bis 95 Gew.-%, wenigstens eines Vinylmonomeren auf
B.2 95 bis 5 Gew.-% wenigstens einer Pfropfgrundlage ausgewählt aus der Gruppe bestehend aus Dienkautschuke, EP(D)M-Kautschuke, Acrylat-, Polyurethan-, Silikon-, Chloropren- und Ethylen/Vinylacetat-Kautschuke sowie Silikon/Acrylat Kompositkautschuke

4. Zusammensetzung gemäß Anspruch 3, wobei die Pfropfgrundlage B.2 ein Silikonacrylat-Komposit-Kautschuk aus sich gegenseitig durchdringendem Silikonkautschuk- und Polyalkyl(meth)acrylat-kautschuk ist, wobei der Anteil an Silikonkautschuk 50 - 95 Gew.-% bezogen auf B.2 beträgt.

5. Zusammensetzung gemäß einem der vorherigen Ansprüche, wobei als Komponente C hexagonales Bornitrid eingesetzt wird.

6. Zusammensetzung gemäß einem der vorherigen Ansprüche, wobei die Komponente C eine mittlere Teilchengröße D50 von 0,1 bis 50 µm ermittelt durch Laserbeugung aufweist.

7. Zusammensetzung gemäß einem der vorherigen Ansprüche, wobei die Komponente D eine mittlere Teilchengröße dso von 0,7 bis 2,5 µm ermittelt durch Sedimentationsanalyse aufweist.

8. Zusammensetzung gemäß einem der vorherigen Ansprüche, wobei als Komponente E mindestens ein Flammschutzmittel ausgewählt aus der Gruppe, die Oligophosphat, Phosphazen und Salze der Phosphinsäure umfasst, eingesetzt wird.

9. Zusammensetzung gemäß Anspruch 8, wobei als Komponente E eine Verbindung mit folgender Struktur eingesetzt wird:

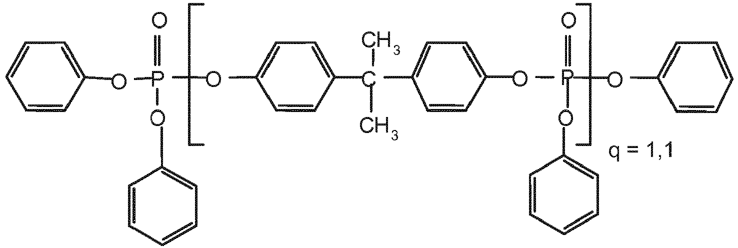

10. Zusammensetzung gemäß einem der vorhergehenden Ansprüche, enthaltend als Komponente F mindestens einen Zusatzstoff ausgewählt aus der Gruppe, die Gleit- und Entformungsmittel, Antidrippingmittel, Nukleiermittel, Antistatika, Leitfähigkeitsadditive, Stabilisatoren, Fließfähigkeitspromotoren, Verträglichkeitsvermittler, weitere von Komponente B verschiedene Schlagzähigkeitsmodifikatoren, weitere polymere Blendpartner, von Komponente D verschiedene Füll- und Verstärkungsstoffe sowie Farbstoffe und Pigmente umfasst.

11. Zusammensetzung gemäß einem der vorherigen Ansprüche, enthaltend als Komponente F Zinkborathydrat Zn₂B₆O₁₁ • 3,5 H₂O.

12. Zusammensetzung gemäß einem der vorherigen Ansprüche, enthaltend oder bestehend aus
55-80 Gew.-% der Komponente A,
1-8 Gew.-% der Komponente B,
2,5-8 Gew.-% der Komponente C
5-15 Gew.-% der Komponente D
3-15 Gew.-% der Komponente E
0,1- 10 Gew.-% der Komponente F.

13. Verwendung einer Zusammensetzung gemäß einem der Ansprüche 1 bis 12 zur Herstellung von spritzgegossenen oder thermogeformten Formkörpern.

14. Formkörper erhältlich aus einer Zusammensetzung gemäß einem der Ansprüche 1 bis 12.

15. Formkörper gemäß Anspruch 14 mit einem Zug-E-Modul von mindestens 4000 MPa gemessen nach ISO 527, einer Wärmefreisetzung nach ISO 5660-1 von höchstens 90 kW/m² einer Rauchgasdichte nach ISO 5659-2 von Ds(4) höchstens 300 und VOF4 von höchstens 600 sowie einer Zeit bis zum Bruch im ESC Test in Rapsöl bei einer Randfaserdehnung von 2,4 % von mindestens zwei Stunden.

## Claims

1. Composition for production of a thermoplastic moulding compound, wherein the composition comprises or consists of the following constituents:
A) 50-90% by weight of aromatic polycarbonate or polyestercarbonate having a relative solution viscosity of at least 1.285, measured in CH₂Cl₂ as solvent at 25°C and a concentration of 0.5 g/100 ml,
B) 1-10% by weight of rubber-modified graft polymer,
C) 2.5-10% by weight of boron nitride,
D) 4-20% by weight of talc,
E) 2-20% by weight of phosphorus-containing flame retardant,
F) 0-20% by weight of further additives.

2. Composition according to Claim 1, wherein component A is branched polycarbonate based on bisphenol A.

3. Composition according to Claim 1 or 2, comprising, as component B, one or more graft polymers of
B.1 5% to 95% by weight of at least one vinyl monomer onto
B.2 95% to 5% by weight of at least one graft base selected from the group consisting of diene rubbers, EP(D)M rubbers, acrylate rubbers, polyurethane rubbers, silicone rubbers, chloroprene rubbers and ethylene/vinyl acetate rubbers, and also silicone/acrylate composite rubbers.

4. Composition according to Claim 3, wherein the graft base B.2 is a silicone-acrylate composite rubber composed of mutually penetrating silicone rubber and polyalkyl(meth)acrylate rubber, wherein the proportion of silicone rubber is 50-95% by weight based on B.2.

5. Composition according to any of the preceding claims, wherein component C is hexagonal boron nitride.

6. Composition according to any of the preceding claims, wherein component C has a median particle size D50 of 0.1 to 50 µm, determined by laser diffraction.

7. Composition according to any of the preceding claims, wherein component D has an average particle size d₅₀ of 0.7 to 2.5 µm determined by sedimentation analysis.

8. Composition according to any of the preceding claims, wherein component E is at least one flame retardant selected from the group comprising oligophosphate, phosphazene and salts of phosphinic acid.

9. Composition according to Claim 8, wherein component E is a compound having the following structure:

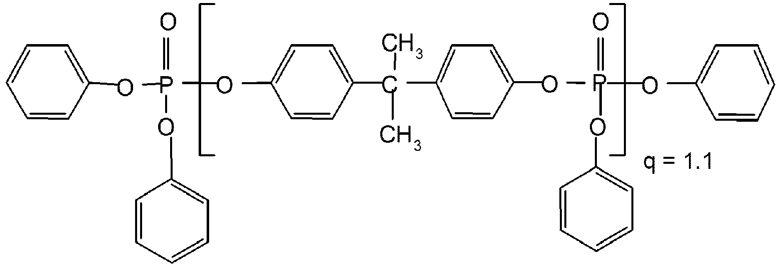

10. Composition according to any of the preceding claims, comprising, as component F, at least one additive selected from the group comprising lubricants and mould release agents, antidripping agents, nucleating agents, antistats, conductivity additives, stabilizers, flowability promoters, compatibilizers, further impact modifiers other than component B, further polymeric blend partners, fillers and reinforcers other than component D, and dyes and pigments.

11. Composition according to any of the preceding claims, comprising, as component F, zinc borate hydrate Zn₂B₆O₁₁ • 3.5 H₂O.

12. Composition according to any of the preceding claims comprising or consisting of
55-80% by weight of component A,
1-8% by weight of component B,
2.5-8% by weight of component C,
5-15% by weight of component D,
3-15% by weight of component E,
0.1-10% by weight of component F.

13. Use of a composition according to any of Claims 1 to 12 for production of injection mouldings or thermoformed mouldings.

14. Moulding obtainable from a composition according to any of Claims 1 to 12.

15. Moulding according to Claim 14 having a tensile modulus of elasticity of at least 4000 MPa measured to ISO 527, heat release according to ISO 5660-1 of not more than 90 kW/m², a smoke gas density to ISO 5659-2 of Ds(4) not more than 300 and VOF4 of not more than 600, and a time before fracture in the ESC test in rapeseed oil at an edge fibre elongation of 2.4% of at least two hours.

## Revendications

1. Composition destinée à la production d'une matière à mouler thermoplastique, la composition contenant les constituants suivants ou consistant en ceux-ci :
A) 50-90 % en poids de polyestercarbonate ou polycarbonate aromatique ayant une viscosité relative en solution d'au moins 1,285 mesurée dans du CH₂Cl₂ en tant que solvant, à 25 °C et à une concentration de 0,5 g/100 ml,
B) 1-10 % en poids de produit de polymérisation par greffage modifié avec un caoutchouc,
C) 2,5-10 % en poids de nitrure de bore,
D) 4-20 % en poids de talc,
E) 2-20 % en poids d'agent ignifuge phosphoré,
F) 0-20 % en poids d'autres additifs.

2. Composition selon la revendication 1, dans laquelle on utilise comme composant A un polycarbonate ramifié à base de bisphénol A.

3. Composition selon la revendication 1 ou 2, contenant comme composant B un ou plusieurs produits de polymérisation par greffage de
B.1 5 à 95 % en poids d'au moins un monomère vinylique sur
B.2 95 à 5 % en poids d'au moins une base de greffage choisie dans le groupe constitué par les caoutchoucs diène, les caoutchoucs EP(D)M, les caoutchoucs d'acrylate, de polyuréthane, de silicone, de chloroprène et d'éthylène/acétate de vinyle ainsi que les caoutchoucs composites de silicone/acrylate.

4. Composition selon la revendication 3, dans laquelle la base de greffage B.2 est un caoutchouc composite de silicone/acrylate à base de caoutchouc de silicone et de caoutchouc poly((méth)acrylate d'alkyle) s'imbriquant mutuellement, la teneur en caoutchouc de silicone valant de 50 à 95 % en poids par rapport à B.2.

5. Composition selon l'une quelconque des revendications précédentes, dans laquelle on utilise comme composant C du nitrure de bore hexagonal.

6. Composition selon l'une quelconque des revendications précédentes, dans laquelle le composant C présente une taille moyenne de particule D50 de 0,1 à 50 µm, déterminée par diffraction laser.

7. Composition selon l'une quelconque des revendications précédentes, dans laquelle le composant D présente une taille moyenne de particule d₅₀ de 0,7 à 2,5 µm, déterminée par analyse par sédimentation.

8. Composition selon l'une quelconque des revendications précédentes, dans laquelle on utilise comme composant E au moins un agent ignifuge choisi dans le groupe qui comprend un oligophosphate, un phosphazène et des sels de l'acide phosphinique.

9. Composition selon la revendication 8, dans laquelle on utilise comme composant E un composé ayant la structure suivante :

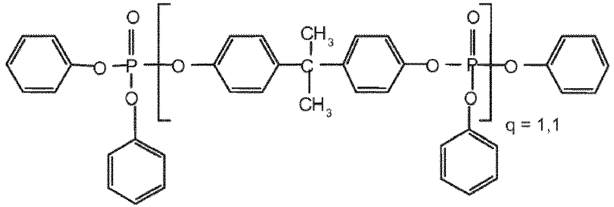

10. Composition selon l'une quelconque des revendications précédentes, contenant en tant que composant F au moins un additif choisi dans le groupe constitué par les lubrifiants et agents de démoulage, agents anticoulure, agents de nucléation, agents antistatiques, additifs de conductibilité, stabilisants, promoteurs de fluidité, agents de compatibilité, d'autres modificateurs antichoc différents du composant B, d'autres partenaires d'alliage polymères, les charges et matières de renfort différentes du composant D ainsi que les colorants et pigments.

11. Composition selon l'une quelconque des revendications précédentes, contenant en tant que composant F du borate de zinc hydraté Zn₂B₆O₁₁.3,5H₂O.

12. Composition selon l'une quelconque des revendications précédentes, contenant ou consistant en
55-80 % en poids du composant A,
1-8 % en poids du composant B,
2,5-8 % en poids du composant C,
5-15 % en poids du composant D,
3-15 % en poids du composant E,
0,1-10 % en poids du composant F.

13. Utilisation d'une composition selon l'une quelconque des revendications 1 à 12 pour la production de corps moulés thermoformés ou moulés par injection.

14. Corps moulé pouvant être obtenu à partir d'une composition selon l'une quelconque des revendications 1 à 12.

15. Corps moulé selon la revendication 14, ayant un module d'élasticité en traction d'au moins 4 000 MPa, mesuré selon ISO 527, un dégagement de chaleur selon ISO 5660-1 d'au maximum 90 kW/m² à une densité de gaz de combustion selon ISO 5659-2 de Ds(4) d'au maximum 300 et un VOF4 d'au maximum 600 ainsi qu'un temps jusqu'à la rupture d'au moins deux heures dans l'essai ESC dans de l'huile de colza à un allongement des fibres extérieures de 2,4 %.
